# EUROPEAN PATENT APPLICATION

(11) **EP 4 755 180 A1**
(43) Date of publication of application: **10.06.2026**
(21) Application number: 24888669.9
(22) Date of filing: 01.11.2024
(51) Int. Cl.: A01K 23/00

(54) **DIAPER FOR PETS**

(30) Priority: 07.11.2023 JP 2023189882; 08.04.2024 JP 2024062216
(71) Applicant: Unicharm Corporation, Ehime 799-0111 (JP)
(72) Inventor: KOMATSUBARA Daisuke, Kanonji-shi, Kagawa 769-1602 (JP)
(74) Representative: Dolleymores
(86) International application number: PCT/JP2024/039159
(87) International publication number: WO 2025/100374

(57) **Abstract**

A pet diaper 1 includes a main body portion 2. The main body portion 2 has a top sheet 3, a back sheet 4, and an absorbent core 11. At least one opening or at least one cut portion 91 for forming at least one opening that improves breathability of an internal space facing the top sheet 3 without a tail of a pet being inserted in a worn state is provided at a position not overlapping with the absorbent core 11 in the main body portion 2.

## Description

### Technical Field

The present disclosure relates to a pet diaper.

### Background Art

Conventionally, a pet diaper to be worn on a pet such as a dog or a cat is known. For example, Patent Literature 1 discloses a pet diaper in which a tail insertion portion (cut) for inserting a tail of a pet is provided in a portion on a dorsal side relative to an absorbent core.

### Citation List

### Patent Literature

Patent Literature 1: Japanese Unexamined Patent Publication No. 2012-205542

### Summary of Invention

### Technical Problem

Generally, a pet diaper provided with an absorbent core for absorbing urination of a pet has a structure covering not only a crotch but also a back of the pet in order to prevent urine leakage caused by wearing deviation. For this reason, there was room for improvement regarding comfort during wearing, particularly regarding breathability of the pet diaper.

Therefore, an aspect of the present disclosure aims to provide a pet diaper capable of improving breathability in a worn state while suppressing urine leakage caused by wearing deviation.

### Solution to Problem

A pet diaper according to an aspect of the present disclosure is a pet diaper to be worn on a pet so as to cover at least a waistline of the pet, including a main body portion having a width direction along a waistline direction of the pet and a front-rear direction orthogonal to the width direction in a worn state where the pet diaper is worn on the pet, wherein the main body portion has a top sheet disposed at a position facing a skin of the pet in the worn state, a back sheet disposed on a side opposite to a skin side of the pet in the worn state, and an absorbent core disposed between the top sheet and the back sheet, and at least one opening that improves breathability of an internal space facing the top sheet without a tail of the pet being inserted in the worn state or at least one opening forming portion for forming the at least one opening is provided at a position not overlapping with the absorbent core in the main body portion.

### Advantageous Effects of Invention

According to the present disclosure, it is possible to provide a pet diaper capable of improving breathability in a worn state while suppressing urine leakage caused by wearing deviation.

### Brief Description of Drawings

FIG. 1 is a plan view of a pet diaper according to an embodiment as viewed from a skin side.
FIG. 2 is a plan view of the pet diaper of FIG. 1 as viewed from a non-skin side.
FIG. 3 is a cross-sectional view of the pet diaper taken along line III-III of FIG. 1.
FIG. 4 is a cross-sectional view of the pet diaper taken along line IV-IV of FIG. 1.
FIG. 5 is a diagram showing an example of a worn state of the pet diaper.
FIG. 6 is a diagram schematically showing a state of a part of a body of a pet and a part of the pet diaper in a cross section taken along line VI-VI of FIG. 5.
FIG. 7 is a plan view of a pet diaper according to a fourth modification as viewed from a non-skin side.
FIG. 8 is a plan view of a pet diaper according to a fifth modification as viewed from a non-skin side.
FIG. 9 is a diagram showing an example of a worn state of a pet diaper according to a sixth modification.
FIG. 10 is a plan view of the pet diaper of FIG. 9 as viewed from a skin side.
FIG. 11 is a plan view of the pet diaper of FIG. 9 as viewed from a non-skin side.
FIG. 12 is a cross-sectional view of the absorbent article for pets taken along line A-A of FIG. 10.
FIG. 13 is a cross-sectional view of the absorbent article for pets taken along line B-B of FIG. 10.
FIG. 14 is a cross-sectional view of the absorbent article for pets taken along line C-C of FIG. 10.

### Description of Embodiments

At least the following aspects 1 to 36 will become apparent from the description of the present specification and the accompanying drawings.

### (Aspect 1)

A pet diaper to be worn on a pet so as to cover at least a waistline of the pet, including a main body portion having a width direction along a waistline direction of the pet and a front-rear direction orthogonal to the width direction in a worn state where the pet diaper is worn on the pet, wherein the main body portion has: a top sheet disposed at a position facing a skin of the pet in the worn state; a back sheet disposed on a side opposite to a skin side of the pet in the worn state; and an absorbent core disposed between the top sheet and the back sheet, and at least one opening that improves breathability of an internal space facing the top sheet without a tail of the pet being inserted in the worn state or at least one opening forming portion for forming the at least one opening is provided at a position not overlapping with the absorbent core in the main body portion.

The above pet diaper is worn on a pet so as to cover a waistline of the pet. Thereby, wearing deviation is appropriately suppressed. Further, the above pet diaper is provided with an opening (or an opening forming portion for forming the opening) that improves breathability of an internal space, separately from an opening portion (tail insertion hole) that can be formed for inserting a tail of the pet in the worn state. By forming such an opening, breathability in the worn state can be improved. Further, since the opening is formed at a position not overlapping with the absorbent core, absorption performance of the pet diaper is not inhibited by the opening, and urination absorbed by the absorbent core does not leak out to the outside via the opening. Therefore, according to the above pet diaper, it is possible to improve breathability in the worn state while suppressing urine leakage caused by wearing deviation.

### (Aspect 2)

The pet diaper according to Aspect 1, wherein a tail insertion portion for inserting a tail of the pet is provided in the main body portion, and the at least one opening has a shape or size different from that of the tail insertion portion.

According to Aspect 2, it becomes possible to easily distinguish the opening provided for improving breathability from the tail insertion portion based on the shape or size. As a result, it is possible to prevent a wearer who puts the pet diaper on the pet (for example, a pet owner, etc.) from mistakenly inserting the tail of the pet into the opening for ventilation.

### (Aspect 3)

The pet diaper according to Aspect 2, wherein a size of the at least one opening is smaller than a size of an opening portion formed in the tail insertion portion.

According to Aspect 3, it becomes possible to easily distinguish the opening for ventilation and the opening portion formed by the tail insertion portion based on a difference in size between both.

### (Aspect 4)

The pet diaper according to any one of Aspects 1 to 3, wherein the at least one opening has a cutout shape obtained by cutting out a part of the main body portion.

According to Aspect 4, even if the opening is deformed in the worn state, the opening becomes difficult to close, so that it becomes possible to suitably maintain a state of high breathability.

### (Aspect 5)

The pet diaper according to any one of Aspects 1 to 3, wherein the at least one opening is formed by a cut.

According to Aspect 5, since trim is not generated during manufacture of the pet diaper, manufacture of the pet diaper becomes easy.

### (Aspect 6)

The pet diaper according to Aspect 5, wherein the cut has a curved shape.

According to Aspect 6, it is possible to make the opening easy to open in the worn state.

### (Aspect 7)

The pet diaper according to Aspect 5 or 6, wherein the cut has a shape convex toward an outer side in the width direction.

According to Aspect 7, it is possible to make the opening easy to open in the worn state and effectively improve breathability.

### (Aspect 8)

The pet diaper according to any one of Aspects 5 to 7, wherein a plurality of the cuts provided independently of each other are provided in the main body portion.

According to Aspect 8, a plurality of openings corresponding to each of the plurality of cuts can be formed. Thereby, compared to a case where one long opening is formed, a risk of damage to the main body portion caused by catching or the like can be reduced, and high breathability can be realized by securing an opening area as a whole.

### (Aspect 9)

The pet diaper according to any one of Aspects 1 to 8, wherein the at least one opening is disposed on a dorsal side relative to the absorbent core.

In the worn state, a region on the dorsal side relative to the absorbent core is located on a dorsal side (upper side) relative to a position facing a urination port of the pet (that is, a position overlapping with the absorbent core). Therefore, by forming the opening for ventilation in the region on the dorsal side relative to the absorbent core, a risk of urine leakage from the opening can be reduced. Further, a back portion of a pet such as a dog or a cat (that is, a portion facing a portion on the dorsal side relative to the absorbent core in the main body portion) is a region that is particularly prone to stuffiness due to presence of a lot of hair, but by providing the opening at a position corresponding to such a region, an effect of improving breathability by the opening can be enhanced.

### (Aspect 10)

The pet diaper according to Aspect 9, wherein a tail insertion portion for inserting a tail of the pet is provided in the main body portion, and the at least one opening is disposed on a dorsal side relative to the tail insertion portion.

According to Aspect 10, the effect described for Aspect 9 can be obtained more effectively.

### (Aspect 11)

The pet diaper according to Aspect 9 or 10, wherein the main body portion has a side sheet forming a leg side gather configured to be able to stand up by having both end portions in the front-rear direction fixed and a portion between the both end portions contracting in the front-rear direction, and the opening is disposed on a dorsal side relative to a dorsal side end portion among the both end portions of the leg side gather.

According to Aspect 11, the effect described for Aspect 9 can be obtained more effectively.

### (Aspect 12)

The pet diaper according to any one of Aspects 1 to 11, further including: a pair of fastening tabs extending outward in the width direction from both end portions of the main body portion in the width direction; and a target portion disposed in a region on a dorsal side relative to the pair of fastening tabs in the main body portion and engaging with the pair of fastening tabs in the worn state, wherein the at least one opening is disposed only on a ventral side relative to the target portion in the front-rear direction.

According to Aspect 12, since the opening for ventilation is formed so as not to overlap with the target portion, it is possible to prevent engagement strength between the fastening tab and the target portion from decreasing due to the opening.

### (Aspect 13)

The pet diaper according to any one of Aspects 1 to 12, further including: a pair of fastening tabs extending outward in the width direction from both end portions of the main body portion in the width direction; and a target portion disposed in a region on a dorsal side relative to the pair of fastening tabs in the main body portion and engaging with the pair of fastening tabs in the worn state, wherein the pair of fastening tabs are provided on each of a pair of protruding portions extending outward in the width direction from a region where the absorbent core is disposed in the main body portion, and the at least one opening is disposed in at least one of the pair of protruding portions.

In the worn state, when the pair of fastening tabs are pulled in the width direction to engage with the target portion, the protruding portion curves and comes into close contact with a body of the pet. According to Aspect 13, since the opening disposed in such a protruding portion is easy to open in the worn state, the effect of improving breathability by the opening can be enhanced.

### (Aspect 14)

The pet diaper according to Aspect 13, wherein the at least one opening has a first opening disposed in one of the pair of protruding portions and a second opening disposed in the other of the pair of protruding portions, and an elastic member that is fixed to the main body portion in a state of being stretched in the width direction and extends in the width direction is provided in a region between the first opening and the second opening of the main body portion.

According to Aspect 14, in the worn state, a force by which the elastic member contracts in the width direction acts, whereby the openings (the first opening and the second opening) disposed in the protruding portions become even easier to open, so that the effect of improving breathability by the openings can be further enhanced.

### (Aspect 15)

The pet diaper according to any one of Aspects 1 to 14, further including: a pair of fastening tabs extending outward in the width direction from both end portions of the main body portion in the width direction; and a target portion disposed in a region on a dorsal side relative to the pair of fastening tabs in the main body portion and engaging with the pair of fastening tabs in the worn state, wherein the pair of fastening tabs are provided on each of a pair of protruding portions extending outward in the width direction from a region where the absorbent core is disposed in the main body portion, and the at least one opening is disposed between the pair of fastening tabs.

In the worn state, when the pair of fastening tabs are pulled in the width direction to engage with the target portion, a region between the pair of fastening tabs (that is, a portion where the opening is provided) curves and comes into close contact with the body of the pet. According to Aspect 15, since the opening disposed in such a region is easy to open in the worn state, the effect of improving breathability by the opening can be enhanced.

### (Aspect 16)

The pet diaper according to any one of Aspects 1 to 14, further including: a pair of fastening tabs extending outward in the width direction from both end portions of the main body portion in the width direction; and a target portion disposed in a region on a dorsal side relative to the pair of fastening tabs in the main body portion and engaging with the pair of fastening tabs in the worn state, wherein the at least one opening is disposed at a position where the main body portion and a base material of the fastening tab overlap.

According to Aspect 16, by forming the opening in a thick portion where the main body portion and the base material of the fastening tab overlap, which is a portion where breathability is particularly inhibited and stuffiness is likely to occur, the effect of improving breathability by the opening can be enhanced.

### (Aspect 17)

The pet diaper according to any one of Aspects 1 to 16, wherein the main body portion has a side sheet forming a leg side gather configured to be able to stand up by having both end portions in the front-rear direction fixed and a portion between the both end portions contracting in the front-rear direction, and the opening is disposed on an outer side relative to an upright fulcrum of the leg side gather in the width direction.

According to Aspect 17, since the opening is formed on an outer side relative to the fulcrum where the leg side gather (upright portion) for damming up excrement from the pet is formed, it is possible to improve breathability by the opening while preventing urine leakage caused by the opening.

### (Aspect 18)

The pet diaper according to any one of Aspects 1 to 17, wherein a tail insertion portion for inserting a tail of the pet is provided in the main body portion, and the opening is disposed on an outer side relative to the tail insertion portion in the width direction.

According to Aspect 18, by disposing the opening at a position shifted to the outer side in the width direction relative to the tail insertion portion, a region where the opening is formed in the main body portion can be curved along the body of the pet in the worn state. As a result, the opening portion becomes easy to open, so that breathability can be suitably improved.

### (Aspect 19)

The pet diaper according to any one of Aspects 1 to 18, wherein the at least one opening and the tail insertion portion are provided in a third portion from a ventral side when the main body portion is divided into four in the front-rear direction.

According to Aspect 19, since the at least one opening is formed in a portion corresponding to the back of the pet which is particularly prone to stuffiness in the worn state (the third portion from the ventral side), breathability can be suitably improved.

### (Aspect 20)

The pet diaper according to any one of Aspects 1 to 19, wherein the main body portion has a side sheet forming a leg side gather configured to be able to stand up by having both end portions in the front-rear direction fixed and a portion between the both end portions contracting in the front-rear direction, and the at least one opening is disposed at a position overlapping with the side sheet.

According to Aspect 20, regarding the opening disposed at the position overlapping with the side sheet, rigidity of a portion where the opening is formed becomes high by an amount of the side sheet, so that the opening becomes easy to open in the worn state. As a result, breathability can be suitably improved.

### (Aspect 21)

The pet diaper according to any one of Aspects 1 to 20, wherein a leg elastic member that is fixed to the main body portion in a state of being stretched in the front-rear direction along an outer edge portion of the main body portion in the width direction and extends in the front-rear direction is provided, and a distance between the leg elastic member and the at least one opening in the width direction is smaller than a diameter of a minimum circle including the at least one opening.

In the worn state, a region where the leg elastic member is provided is likely to be in close contact with the body of the pet due to contraction of the leg elastic member. According to Aspect 21, by disposing the opening at a position close to such a region (that is, a position satisfying the requirement of the above distance), the opening can be made easy to open, and breathability can be suitably improved.

### (Aspect 22)

The pet diaper according to any one of Aspects 1 to 21, wherein a leg elastic member that is fixed to the main body portion in a state of being stretched in the front-rear direction along an outer edge portion of the main body portion in the width direction and extends in the front-rear direction is provided, and the at least one opening is disposed on an inner side relative to the leg elastic member in the width direction.

In the worn state, a portion on the inner side in the width direction relative to the leg elastic member is likely to be in close contact with the body of the pet. According to Aspect 22, by forming the opening in such a region, the effect of improving breathability by the opening can be enhanced.

### (Aspect 23)

The pet diaper according to any one of Aspects 1 to 22, wherein the back sheet has: an outer sheet made of a nonwoven fabric constituting an outermost surface of the main body portion; and an inner sheet disposed between the outer sheet and the absorbent core, and the at least one opening penetrates at least the inner sheet in a thickness direction of the main body portion orthogonal to the width direction and the front-rear direction.

The inner sheet disposed adjacent to the absorbent core in the back sheet is usually formed of a material with low breathability (for example, a film) for leakage prevention. According to Aspect 23, by forming the opening so as to penetrate such an inner sheet, breathability in the worn state can be effectively improved.

### (Aspect 24)

The pet diaper according to Aspect 23, wherein the back sheet has: an outer sheet made of a nonwoven fabric constituting an outermost surface of the main body portion; and an inner sheet disposed between the outer sheet and the absorbent core, and the at least one opening penetrates at least the top sheet and the inner sheet in the thickness direction.

In Aspect 24, since the outer sheet is made of a nonwoven fabric, it has a certain degree of breathability. Therefore, by forming the opening so as to penetrate at least the top sheet and the inner sheet, it becomes possible to ventilate an inner space facing the top sheet and an outer space facing the back sheet (outer sheet) via the opening and the nonwoven fabric (outer sheet). As described above, breathability in the worn state can be effectively improved.

### (Aspect 25)

The pet diaper according to Aspect 23 or 24, wherein the opening penetrates the outer sheet in the thickness direction.

According to Aspect 25, by forming the opening so as to penetrate also the outer sheet composed of a nonwoven fabric, breathability in the worn state can be even more effectively improved.

### (Aspect 26)

The pet diaper according to any one of Aspects 1 to 25, wherein the back sheet has: an outer sheet made of a nonwoven fabric constituting an outermost surface of the main body portion; and an inner sheet disposed between the outer sheet and the absorbent core, the at least one opening has a third opening penetrating the top sheet in a thickness direction of the main body portion orthogonal to the width direction and the front-rear direction, and a fourth opening penetrating the inner sheet in the thickness direction, and the third opening and the fourth opening are disposed so as not to overlap in the thickness direction.

According to Aspect 26, improvement of breathability in the worn state can be achieved by the third opening and the fourth opening, and material strength (thickness) can be appropriately maintained in the entire main body portion.

### (Aspect 27)

The pet diaper according to any one of Aspects 1 to 26, wherein the main body portion has a horizontally long shape having a longitudinal direction and a short direction, and is worn by being wrapped around a waistline of the pet such that the longitudinal direction is along the waistline of the pet.

According to Aspect 27, in a belly band type pet diaper, breathability in the worn state can be improved by the opening (or the opening forming portion for forming the opening).

### (Aspect 28)

The pet diaper according to Aspect 27, wherein the at least one opening or the at least one opening forming portion is provided in a region of a range where the absorbent core is disposed in the short direction.

In the belly band type pet diaper, the region of the range where the absorbent core is disposed in the short direction in the main body portion is a region having relatively high rigidity due to an influence of the absorbent core. By providing the opening (or the opening forming portion forming the opening) in such a region having high rigidity, the opening can be made easy to widen in the worn state, so that breathability in the worn state is effectively improved.

### (Aspect 29)

The pet diaper according to Aspect 27 or 28, wherein the main body portion has a fixing member that is disposed on a first side which is one of both sides of the absorbent core in the longitudinal direction, and is fixed to a portion on a second side opposite to the first side of the main body portion in the worn state, and the at least one opening or the at least one opening forming portion is provided in a region of a range where the fixing member is disposed in the short direction.

In the belly band type pet diaper, the region of the range where the fixing member is disposed in the short direction in the main body portion is a region having relatively high rigidity due to an influence of the fixing member. By providing the opening (or the opening forming portion forming the opening) in such a region having high rigidity, the opening can be made easy to widen in the worn state, so that breathability in the worn state is effectively improved.

### (Aspect 30)

The pet diaper according to Aspect 29, wherein the portion on the second side in the main body portion has a non-opening region where the at least one opening or the at least one opening forming portion is not provided, and which has a width longer than a width of the fixing member in the longitudinal direction.

According to Aspect 30, since it becomes possible to fix the fixing member to the non-opening region so that the fixing member does not protrude from the non-opening region, it is possible to suppress overlap between the fixing member and an opening (or an opening formed by the opening forming portion) that can be provided outside the non-opening region in the portion on the second side of the main body portion. Thereby, it is possible to prevent fixing strength of the fixing member to the portion on the second side of the main body portion from decreasing due to the overlap between the opening and the fixing member, and it is possible to prevent breathability in the worn state realized by the opening from being inhibited by the fixing member.

### (Aspect 31)

The pet diaper according to Aspect 29 or 30, wherein the at least one opening or the at least one opening forming portion is provided in the portion on the second side of the main body portion, and a width in the longitudinal direction of the at least one opening or the at least one opening forming portion provided in the portion on the second side is longer than the width of the fixing member in the longitudinal direction.

According to Aspect 31, even when the fixing member is fixed to the portion on the second side of the main body portion such that the fixing member and the opening (or the opening formed by the opening forming portion) overlap in the worn state, it is guaranteed that a region where the fixing member and the portion on the second side of the main body portion are fixed is continuously formed in the entire area of the fixing member in the short direction. Thereby, it is possible to prevent fixing strength of the fixing member from decreasing due to the opening provided in the portion on the second side of the main body portion.

### (Aspect 32)

The pet diaper according to Aspect 29 or 30, wherein the at least one opening or the at least one opening forming portion is provided in the portion on the second side of the main body portion, and a width in the longitudinal direction of the at least one opening or the at least one opening forming portion provided in the portion on the second side is shorter than the width of the fixing member in the longitudinal direction.

According to Aspect 32, since it is possible to prevent the entire opening (or the opening formed by the opening forming portion) provided in the portion on the second side of the main body portion from being covered by the fixing member in the worn state, it is possible to suppress breathability in the worn state (that is, breathability realized by the opening formed in the portion on the second side of the main body portion) from being inhibited by the fixing member.

### (Aspect 33)

The pet diaper according to any one of Aspects 27 to 32, wherein the main body portion has a fixing member that is disposed on a first side which is one of both sides of the absorbent core in the longitudinal direction, and is fixed to a portion on a second side opposite to the first side of the main body portion in the worn state, and the at least one opening or the at least one opening forming portion is provided in a region between the absorbent core and the fixing member in the portion on the first side of the main body portion.

According to Aspect 33, since the at least one opening is formed in a region that is a position facing a side part on the dorsal side of the pet in the worn state and where the number of overlapping sheet materials tends to be large (that is, a portion that is particularly prone to stuffiness because it tends to overlap with the portion on the second side of the main body portion), breathability can be suitably improved.

### (Aspect 34)

The pet diaper according to any one of Aspects 27 to 33, further comprising: a waistline elastic member that is fixed to the main body portion in a state of being stretched in the longitudinal direction and extends in the longitudinal direction along both side edge portions of the main body portion in the short direction, wherein the at least one opening or the at least one opening forming portion is provided in a region of a range where the main body portion expands and contracts by the waistline elastic member in the longitudinal direction.

According to Aspect 34, in the worn state, by appropriately separating (releasing) the opening provided in the main body portion (or the opening formed by the opening forming portion) from the body of the pet by expansion and contraction of the waistline elastic member, breathability can be further improved.

### (Aspect 35)

The pet diaper according to any one of Aspects 1 to 34, wherein an opening similar to the at least one opening or an opening forming portion similar to the at least one opening forming portion is not disposed in a region overlapping with the absorbent core in the main body portion.

According to Aspect 35, by not providing any opening for ventilation (or opening forming portion forming the opening) in the region overlapping with the absorbent core in the main body portion, it is possible to reliably prevent absorption performance of the pet diaper from being inhibited by the opening.

### [Embodiment]

Hereinafter, embodiments of the present disclosure will be described in detail with reference to the drawings. Note that in the following description, the same reference numerals are used for the same or corresponding elements, and redundant description will be omitted.

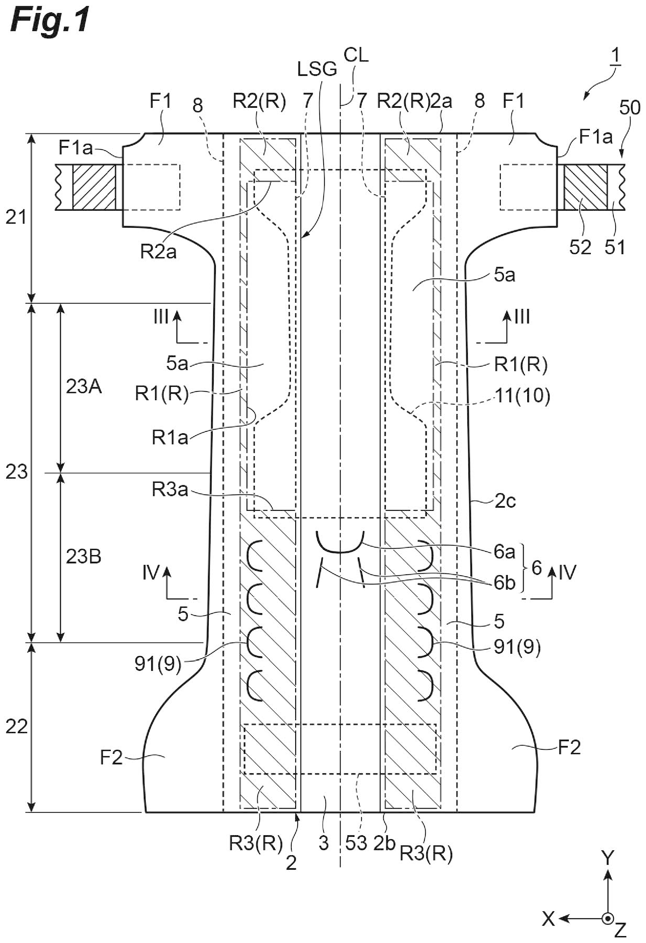

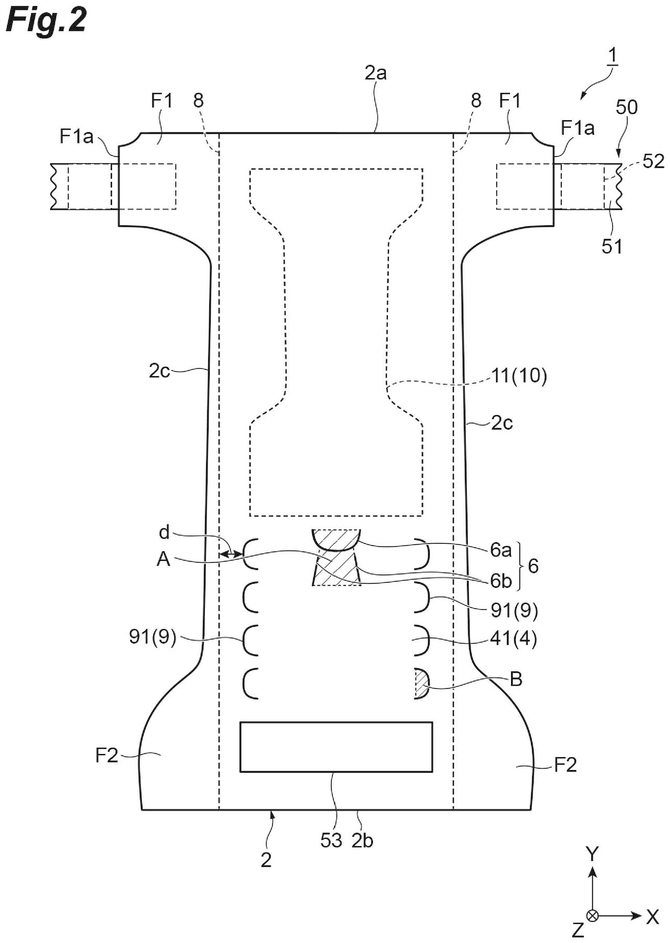

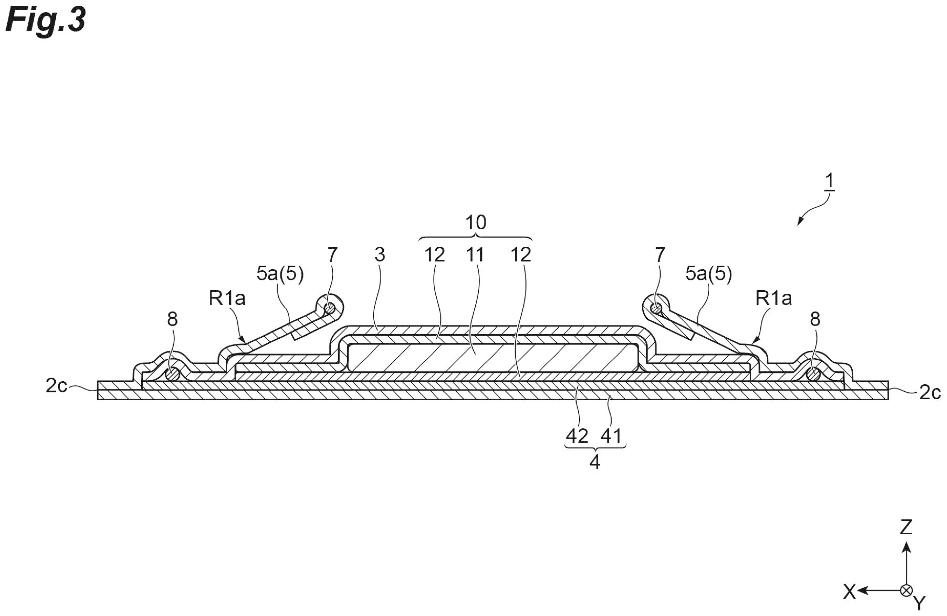

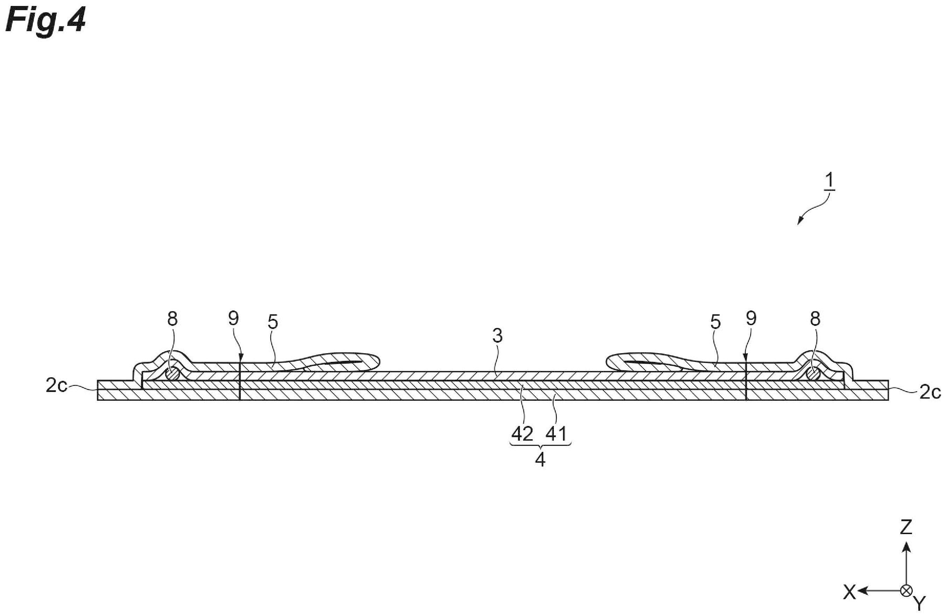

A configuration of a pet diaper 1 according to an embodiment will be described with reference to FIGS. 1 to 4. FIG. 1 is a plan view of the pet diaper 1 as viewed from a skin side. FIG. 2 is a plan view of the pet diaper 1 as viewed from a non-skin side. FIGS. 1 and 2 show the pet diaper 1 in a stretched state where the pet diaper 1 is stretched until no wrinkles are formed. FIG. 3 is a cross-sectional view of the pet diaper 1 taken along line III-III of FIG. 1. FIG. 4 is a cross-sectional view of the pet diaper 1 taken along line IV-IV of FIG. 1. The pet diaper 1 is a diaper to be worn on a pet. In the present specification, "pet" broadly includes vertebrates and invertebrates, and typically includes companion animals such as dogs, cats, rabbits, and hamsters. As an example, the pet diaper 1 is a diaper for dogs.

In the present embodiment, the "skin side" is a side facing a skin of the pet in a worn state where the pet diaper 1 is worn on the pet. The "non-skin side" is a side directed to a side opposite to the skin of the pet in the worn state. As shown in FIG. 1, the pet diaper 1 has a longitudinal direction Y (front-rear direction) connecting a ventral side to a dorsal side of the pet, a width direction X orthogonal to the longitudinal direction Y and disposed along a waistline direction of the pet, and a thickness direction Z orthogonal to the longitudinal direction Y and the width direction X. As shown in FIGS. 3 and 4, the thickness direction Z is a stacking direction of respective materials (a top sheet 3, a back sheet 4, an absorber 10, etc., described later) constituting the pet diaper 1. Further, a straight line passing through a central portion of the pet diaper 1 in the width direction X and parallel to the longitudinal direction Y is denoted as a "center line CL".

The pet diaper 1 includes a main body portion 2 extending in the longitudinal direction Y and the width direction X. The main body portion 2 absorbs urine excreted by the pet wearing the pet diaper 1. The main body portion 2 is divided into a ventral side portion 21 located on the ventral side of the pet in the worn state, a dorsal side portion 22 located on the dorsal side of the pet in the worn state, and a crotch portion 23 located between the ventral side portion 21 and the dorsal side portion 22. The ventral side portion 21, the crotch portion 23, and the dorsal side portion 22 are arranged along the longitudinal direction Y from the ventral side (front) toward the dorsal side (rear) of the pet. As an example, when the main body portion 2 is divided into four equal parts in the longitudinal direction Y, one region located most on the ventral side corresponds to the ventral side portion 21, one region located most on the dorsal side corresponds to the dorsal side portion 22, and two regions located between the ventral side portion 21 and the dorsal side portion 22 (that is, the central portion of the main body portion 2 in the longitudinal direction Y) correspond to the crotch portion 23.

The main body portion 2 has a top sheet 3, a back sheet 4, a pair of side sheets 5, and an absorber 10.

The top sheet 3 is a liquid-permeable sheet disposed at a position facing the skin of the pet in the worn state and facing the skin of the pet. The top sheet 3 can be formed by, for example, a nonwoven fabric or woven fabric having liquid permeability, a synthetic resin film having liquid permeation holes, or a composite sheet thereof.

The back sheet 4 is a liquid-impermeable sheet disposed on the side opposite to the skin side of the pet in the worn state. The back sheet 4 can be formed by, for example, a liquid-impermeable nonwoven fabric, a synthetic resin film, or a composite sheet thereof. In the present embodiment, the back sheet 4 has an exterior sheet 41 (outer sheet) and a leakage-preventing sheet 42 (inner sheet). The exterior sheet 41 is disposed on an outer side (non-skin side) relative to the leakage-preventing sheet 42, and constitutes an outermost surface of the main body portion 2. The exterior sheet 41 is formed by, for example, a liquid-impermeable nonwoven fabric. The leakage-preventing sheet 42 is disposed between the exterior sheet 41 and the absorber 10 (absorbent core 11), and is joined to the exterior sheet 41. The leakage-preventing sheet 42 is formed by, for example, a liquid-impermeable synthetic resin film.

The pair of side sheets 5 are sheets for forming leg side gathers LSG, which are upright leakage-preventing gathers, in the ventral side portion 21 and the crotch portion 23. The side sheet 5 can be formed by, for example, a nonwoven fabric having water repellency or hydrophobicity. As shown in FIGS. 1, 3, and 4, each side sheet 5 is disposed on both sides of the main body portion 2 in the width direction X so as to expose the central portion of the top sheet 3 in the width direction X. Each side sheet 5 extends along the longitudinal direction Y from a ventral side end portion 2a of the main body portion 2 to a dorsal side end portion 2b of the main body portion 2. As shown in FIGS. 3 and 4, an outer edge of each side sheet 5 in the width direction X coincides with an outer edge of the back sheet 4, and constitutes an outer edge portion 2c of the main body portion 2. Further, an inner portion of each side sheet 5 in the width direction X is folded back to the non-skin side. Between the folded side sheets 5, an elastic member 7 in a state of being stretched in the longitudinal direction Y is disposed from the ventral side portion 21 to the crotch portion 23. The elastic member 7 is, for example, a rubber thread or the like.

As shown in FIG. 1, each side sheet 5 is joined (fixed) to the top sheet 3 at a fixing portion R surrounded by a dashed-dotted line and hatched with diagonal lines. Each fixing portion R is disposed in the entire region of the main body portion 2 in the longitudinal direction Y. Each fixing portion R has a fixing portion R1 extending in the longitudinal direction Y along an outer edge portion of the fixing portion R in the width direction X, a rectangular fixing portion R2 formed at a ventral side end portion of the fixing portion R in the longitudinal direction Y, and a rectangular fixing portion R3 formed at a dorsal side end portion of the fixing portion R in the longitudinal direction Y.

An upright portion 5a is constituted by a portion of the side sheet 5 between an inner end portion R2a of the fixing portion R2 in the longitudinal direction Y and an inner end portion R3a of the fixing portion R3 in the longitudinal direction Y (that is, a portion of the side sheet 5 where the elastic member 7 is disposed and which is not joined to the top sheet 3). The upright portion 5a is a portion that functions as the leg side gather LSG by standing up due to contraction of the elastic member 7. More specifically, the upright portion 5a is configured to stand up with an inner end portion R1a of the fixing portion R1 in the width direction X as a fulcrum by having both end portions in the longitudinal direction Y fixed by the fixing portions R2 and R3 and contracting in the longitudinal direction Y. That is, the end portion R1a of the fixing portion R1 functions as an upright fulcrum of the leg side gather LSG.

The absorber 10 is disposed between the top sheet 3 and the back sheet 4. As shown in FIG. 3, the absorber 10 consists of an absorbent core 11 and a core wrap 12 covering an upper surface and a lower surface of the absorbent core 11. The absorbent core 11 is disposed so as to span the ventral side portion 21 and the crotch portion 23, and is not disposed in the dorsal side portion 22. The absorbent core 11 is a member that absorbs urine of the pet, and has liquid absorbency and liquid retention. The absorbent core 11 is, for example, a laminate of absorbent materials including pulverized pulp or super absorbent polymer (SAP), or a mixture thereof. The core wrap 12 is, for example, a tissue or a nonwoven fabric sheet. As an example, the absorbent core 11 is formed in a gourd shape (or an hourglass shape) when viewed from the thickness direction Z, and has a shape in which a central portion of the absorbent core 11 in the longitudinal direction Y is constricted.

As shown in FIGS. 1 and 2, the main body portion 2 is provided with a tail insertion portion 6 for inserting the tail of the pet. As an example, the tail insertion portion 6 is constituted by one cut portion 6a and two cut portions 6b. The cut portions 6a and 6b penetrate the main body portion 2 in the thickness direction Z. The cut portion 6a is provided in a central portion in the width direction X of a region on the dorsal side relative to the absorbent core 11 of the crotch portion 23. The cut portion 6a extends in the width direction X across the center line CL and is formed in a curved shape (arc shape) convex toward the dorsal side. The two cut portions 6b are provided on both sides across the center line CL at positions close to the cut portion 6a on the dorsal side relative to the cut portion 6a. The two cut portions 6b have a linear shape inclined with respect to the longitudinal direction Y such that an interval between the two cut portions 6b widens from the ventral side toward the dorsal side.

By pushing a portion between end portions of the cut portion 6a in the width direction X and on the ventral side relative to the cut portion 6a toward the non-skin side, a substantially semicircular opening for inserting the tail of the pet is formed. Further, by tearing a portion of the main body portion 2 between the cut portion 6a and the two cut portions 6b, the cut portion 6a and the two cut portions 6b can be connected. In this case, as shown in FIG. 2, it becomes possible to form an opening having a region A larger than the opening formed by the cut portion 6a. Thus, in the present embodiment, the tail insertion portion 6 is configured such that an opening size can be adjusted (enlarged) by connecting the two cut portions 6b with the cut portion 6a as necessary. Note that the shape and size of the tail insertion portion 6 are not limited to those of the present embodiment. For example, when size adjustment is unnecessary, the cut portions 6b may be omitted. Further, the tail insertion portion 6 may be formed not by a cut but by an opening portion having a predetermined area, or may be formed by a combination of an opening portion and a cut. Further, a plurality of independent tail insertion portions 6 may be provided in the main body portion 2. For example, a first tail insertion portion and a second tail insertion portion, each capable of independently forming an opening for inserting the tail of the pet, may be provided in the main body portion 2. As an example, the first tail insertion portion and the second tail insertion portion may be disposed at positions shifted from each other in the longitudinal direction Y in a substantially central portion of the main body portion in the width direction X.

On both sides of the ventral side portion 21 in the width direction X, a pair of flap portions F1 (protruding portions) protruding outward in the width direction X are formed. Each flap portion F1 extends outward in the width direction X from a region where the absorbent core 11 is disposed in the main body portion 2. Similarly, on both sides of the dorsal side portion 22 in the width direction X, a pair of flap portions F2 protruding outward in the width direction X are formed. A pair of fastening tabs 50 are provided on the pair of flap portions F1. A target portion 53 is provided in a region between the pair of flap portions F2 in the dorsal side portion 22.

Each fastening tab 50 extends outward in the width direction X from both end portions of the main body portion 2 (flap portions F1) in the width direction X (end portions F1a of the flap portions F1 in the width direction X). Each fastening tab 50 has a rectangular shape long in the width direction X, and is disposed in the vicinity of the ventral side end portion 2a of the main body portion 2. Each fastening tab 50 has a base material sheet 51 joined to the flap portion F1, and an engaging portion 52 provided on a surface of the base material sheet 51 on the skin side. A part of the base material sheet 51 is sandwiched between, for example, the side sheet 5 and the back sheet 4. The engaging portion 52 is, for example, a hook-and-loop fastener (for example, a plurality of hook-like members) configured to be engageable with the target portion 53.

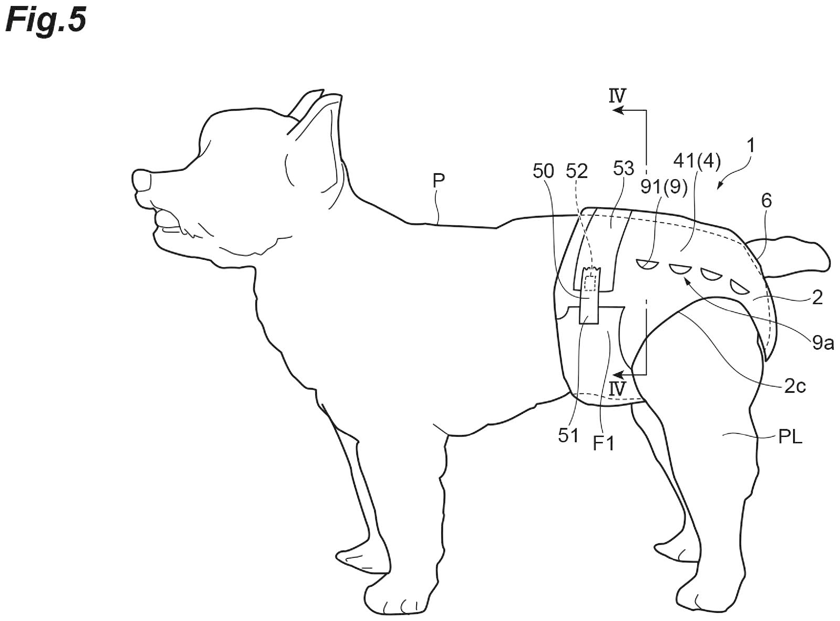

The target portion 53 has a rectangular shape long in the width direction X, and is disposed in the vicinity of the dorsal side end portion 2b of the main body portion 2 on the surface of the back sheet 4 (exterior sheet 41) on the non-skin side. As shown in FIG. 5, in the worn state, the engaging portions 52 of the pair of fastening tabs 50 are engaged with the target portion 53. FIG. 5 shows a state in which a pet P is standing in the worn state.

The main body portion 2 has a pair of elastic members 8 (leg elastic members) that are disposed extending in the longitudinal direction Y along the outer edge portions 2c of the main body portion 2 in the width direction X (in the present embodiment, portions of the outer edge portions 2c located in the crotch portion 23 where the flap portions F1 and F2 are not provided) and contract in the longitudinal direction Y. Each elastic member 8 is, for example, a rubber thread similar to the elastic member 7. Each elastic member 8 is provided so as to contract in the longitudinal direction Y by being fixed to the main body portion 2 in a state of being stretched in the longitudinal direction Y. In the present embodiment, as shown in FIG. 3, each elastic member 8 is disposed between the top sheet 3 and the back sheet 4 (leakage-preventing sheet 42). As shown in FIG. 5, in the worn state, the pair of elastic members 8 contract in the longitudinal direction Y, whereby the outer edge portions 2c of the main body portion 2 function as leg gathers that fit around the legs of the pet P.

As shown in FIG. 1, a cutting portion 9 is provided in a region located between the tail insertion portion 6 and the elastic member 8 in the width direction X. In the present embodiment, the cutting portion 9 is provided on each of both sides across the center line CL in the width direction X. Each cutting portion 9 has a plurality of (four on each of left and right sides in the present embodiment) cut portions 91 (opening forming portions) each having a predetermined length in the longitudinal direction Y. In each cutting portion 9, the plurality of cut portions 91 are arranged in the longitudinal direction Y. Each cut portion 91 penetrates the main body portion 2 in the thickness direction Z of the main body portion 2.

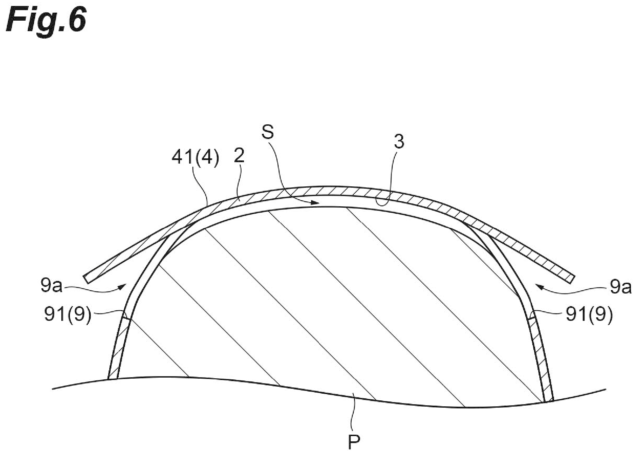

Thus, in the pet diaper 1, at least one (in the present embodiment, a total of eight, four on each of both sides in the width direction X) cut portion 91 for forming at least one opening 9a (see FIG. 6) that improves breathability of an internal space (as an example, a gap S shown in FIG. 6) facing the top sheet 3 without the tail of the pet being inserted in the worn state is provided at a position not overlapping with the absorbent core 11 in the main body portion 2. In the pet diaper 1, the cutting portion 9 (in the present embodiment, four cut portions 91 extending in the longitudinal direction Y on each of both left and right sides) having a predetermined length in the longitudinal direction Y is provided in a region between the tail insertion portion 6 and the elastic member 8 in the width direction X. Thereby, as shown in FIGS. 5 and 6, during use of the pet diaper 1 (a state where the pet P is standing on four legs as shown in FIG. 5), the opening 9a that improves breathability of the internal space (gap S) facing the top sheet 3 is formed by opening of a portion where the cut portion 91 is provided.

Next, effects of the pet diaper 1 described above will be described. As shown in FIGS. 5 and 6, the pet diaper 1 is worn on the pet P so as to cover the waistline of the pet P. Thereby, wearing deviation is appropriately suppressed. Further, the pet diaper 1 is provided with the cut portion 91 for forming the opening 9a that improves breathability of the internal space (gap S), separately from an opening portion (in the present embodiment, a tail insertion hole corresponding to the region A formed by the tail insertion portion 6) that can be formed for inserting the tail of the pet P in the worn state. By forming such an opening 9a, breathability in the worn state can be improved. Further, since the opening 9a is formed at a position not overlapping with the absorbent core 11, absorption performance of the pet diaper 1 is not inhibited by the opening 9a, and urination absorbed by the absorbent core 11 does not leak out to the outside via the opening 9a. Therefore, according to the pet diaper 1, it is possible to improve breathability in the worn state while suppressing urine leakage caused by wearing deviation.

The at least one opening 91a (in the present embodiment, an opening formed by the cut portion 91; the same applies hereinafter) has a shape or size different from that of the tail insertion portion 6. Here, the opening 9a is an opening formed according to the cut portion 91 (cut). That is, the opening 9a is an opening formed by a part of the main body portion 2 turning up along the cut portion 91. The opening 9a has a size corresponding to a region B shown in FIG. 2 and has a maximum opening area when the part of the main body portion 2 completely turns up along the cut portion 91. In the present embodiment, the tail insertion portion 6 is composed of one cut portion 6a and two cut portions 6b, and has a shape and size different from those of each opening 91a. Further, comparing the opening 9a (region B) and the opening formed by the tail insertion portion 6 (region A), both have shapes and sizes different from each other. According to the above configuration, it becomes possible to easily distinguish the opening 9a provided for improving breathability from the tail insertion portion 6 based on the shape or size. As a result, it is possible to prevent a wearer who puts the pet diaper 1 on the pet (for example, a pet owner, etc.) from mistakenly inserting the tail of the pet into the opening 9a for ventilation.

A size of the at least one opening 91a is smaller than a size of an opening portion formed in the tail insertion portion 6. As described above, the maximum area of the opening 9a is an area of an opening region (region B) when the part of the main body portion 2 completely turns up along the cut portion 91 as shown in FIG. 2. On the other hand, the size of the opening portion formed in the tail insertion portion 6 is an area of the region A shown in FIG. 2. As shown in FIG. 2, the size of the opening 9a (area of the region B) is smaller than the size of the opening portion formed by the tail insertion portion 6 (area of the region A). According to the above configuration, it becomes possible to easily distinguish the opening 9a for ventilation and the opening portion formed by the tail insertion portion 6 based on a difference in size between both.

The at least one opening 9a is formed by the cut portion 91 (cut). That is, as described above, the opening 9a is formed by the part of the main body portion 2 turning up along the cut portion 91 (cut). According to the above configuration, since trim (a piece generated by cutting out a part of the main body portion 2) is not generated during manufacture of the pet diaper 1, manufacture of the pet diaper 1 becomes easy.

Note that the at least one opening 9a may have a cutout shape obtained by cutting out a part of the main body portion 2. That is, the opening 9a may be formed by cutting off a part of the main body portion 2 having a predetermined area when viewed from the thickness direction Z. For example, the opening 9a may be formed by cutting out a part of the main body portion 2 corresponding to the region B shown in FIG. 2. That is, in the present embodiment, the opening 9a is configured to be formed along the cut portion 91 in the worn state by providing the cut portion 91 in the main body portion 2, but the opening 9a itself (a partially hollowed-out opening portion) may be provided in the main body portion 2. In this case, even if the opening 9a is deformed in the worn state, the opening 9a becomes difficult to close. That is, by forming the opening 9a by cutting out a part of the main body portion 2, even if the part of the main body portion 2 including the opening 9a shrinks, a state where the opening 9a is open can be maintained, and it becomes possible to suitably maintain a state of high breathability.

The cut portion 91 forming the opening 9a has a curved shape. According to the above configuration, it is possible to make the opening 9a easy to open in the worn state. That is, the part of the main body portion 2 can be suitably turned up along the cut portion 91 extending in a curved shape.

Furthermore, as shown in FIGS. 1 and 2, the cut portion 91 forming the opening 9a has a shape convex toward an outer side in the width direction X. According to the above configuration, it is possible to make the opening 9a easy to open in the worn state and effectively improve breathability. For example, by disposing the cut portion 91 between the tail insertion portion 6 and the elastic member 8 as in the present embodiment, it is possible to realize a configuration in which the opening 9a opens in an umbrella shape at a side surface portion of the back of the pet P as shown in FIG. 6. Thereby, air comes to pass from a lateral direction of the pet P to the gap S, and breathability is effectively improved.

A plurality of (in the present embodiment, a total of eight, four on each of both sides across the center line CL) cut portions 91 provided independently of each other are provided in the main body portion 2. According to the above configuration, as shown in FIG. 5, a plurality of openings 9a corresponding to each of the plurality of cut portions 91 can be formed in the worn state. Thereby, compared to a case where one long opening is formed, a risk of damage to the main body portion 2 caused by catching or the like can be reduced, and high breathability can be realized by securing an opening area as a whole.

As shown in FIGS. 1 and 2, the at least one opening 9a is disposed on a dorsal side relative to the absorbent core 11. In the present embodiment, since all the cut portions 91 are disposed on the dorsal side relative to the absorbent core 11, all the openings 9a are formed on the dorsal side relative to the absorbent core 11. In the worn state, a region on the dorsal side relative to the absorbent core 11 is located on a dorsal side (upper side) relative to a position facing a urination port of the pet (that is, a position overlapping with the absorbent core 11). Therefore, by forming the opening 9a for ventilation in the region on the dorsal side relative to the absorbent core 11, a risk of urine leakage from the opening 9a can be reduced. Further, a back portion of a pet such as a dog or a cat (that is, a portion facing a portion on the dorsal side relative to the absorbent core 11 in the main body portion 2) is a region that is particularly prone to stuffiness due to presence of a lot of hair, but by providing the opening 9a at a position corresponding to such a region, an effect of improving breathability by the opening 9a can be enhanced.

As shown in FIGS. 1 and 2, the at least one opening 9a is disposed on a dorsal side relative to the tail insertion portion 6. That is, at least a part of the plurality of openings 9a (in the present embodiment, openings 9a formed by each of three cut portions 91 on the dorsal side excluding the cut portion 91 most on the ventral side among the four cut portions 91 arranged in the longitudinal direction Y on each of both sides in the width direction X) includes a portion located on the dorsal side relative to the tail insertion portion 6. According to the above configuration, breathability of the back portion of the pet, which is a region particularly prone to stuffiness as described above, can be suitably improved.

As shown in FIG. 1, the at least one opening 9a is disposed on a dorsal side relative to a dorsal side end portion R3a among both end portions (end portion R2a and end portion R3a) of the leg side gather LSG. In the present embodiment, since all the cut portions 91 are disposed on the dorsal side relative to the end portion R3a, all the openings 9a are formed on the dorsal side relative to the end portion R3a. According to the above configuration, breathability of the back portion of the pet, which is a region particularly prone to stuffiness as described above, can be suitably improved.

As shown in FIG. 2, the at least one opening 9a is disposed only on a ventral side relative to the target portion 53 in the longitudinal direction Y. That is, the cut portions 91 corresponding to all the openings 9a are disposed on the ventral side relative to the target portion 53 and do not overlap with the target portion 53. According to the above configuration, since the opening 9a for ventilation is formed so as not to overlap with the target portion 53, it is possible to prevent engagement strength between the fastening tab 50 (engaging portion 52) and the target portion 53 from decreasing due to the opening 9a.

As shown in FIGS. 1 and 2, the at least one opening 9a is disposed on an outer side relative to the tail insertion portion 6 in the width direction X. In the present embodiment, since all the cut portions 91 are disposed on the outer side relative to the tail insertion portion 6 in the width direction X, all the openings 9a are formed on the outer side relative to the tail insertion portion 6 in the width direction X. According to the above configuration, by disposing the opening 9a at a position shifted to the outer side in the width direction X relative to the tail insertion portion 6, a region where the opening 9a is formed in the main body portion 2 can be curved along the body of the pet P in the worn state (see FIG. 6). As a result, the opening 9a becomes easy to open, so that breathability can be suitably improved.

As shown in FIG. 1, the at least one opening 9a and the tail insertion portion 6 are provided in a third portion from a ventral side when the main body portion 2 is divided into four in the longitudinal direction Y. That is, when the crotch portion 23 is divided into two into a first portion 23A on the ventral side and a second portion 23B on the dorsal side, the cut portion 91 corresponding to the at least one opening 9a is provided in the second portion 23B. In the present embodiment, among the four cut portions 91 arranged in the longitudinal direction Y, the entirety of two cut portions 91 on the ventral side and a part of the third cut portion 91 from the ventral side are provided in the second portion 23B. According to the above configuration, since the at least one opening 9a is formed in a portion corresponding to the back of the pet which is particularly prone to stuffiness in the worn state (that is, the second portion 23B), breathability can be suitably improved.

As shown in FIGS. 1 and 4, the at least one opening 9a is disposed at a position overlapping with the side sheet 5. In the present embodiment, since all the cut portions 91 are disposed at positions overlapping with the side sheet 5, all the openings 9a are formed at positions overlapping with the side sheet 5. According to the above configuration, regarding the opening 9a disposed at the position overlapping with the side sheet 5, rigidity of a portion where the opening 9a is formed (a part of the main body portion 2) becomes high by an amount of the side sheet 5, so that the opening 9a becomes easy to open in the worn state. As a result, breathability can be suitably improved.

As shown in FIG. 2, a distance d between the elastic member 8 and the at least one opening 9a in the width direction X (here, as an example, a distance between an outer end portion of the cut portion 91 corresponding to the opening 9a most on the ventral side in the width direction X and the elastic member 8) is smaller than a width of the opening 9a (that is, a diameter of a minimum circle including the opening 9a (region B in the present embodiment)). In other words, in the pet diaper 1, the opening 9a is formed at a position sufficiently close to the elastic member 8 with respect to the width of the opening 9a. In the worn state, a region where the elastic member 8 is provided is likely to be in close contact with the body of the pet P due to contraction of the elastic member 8. According to the above configuration, by disposing the opening 9a at a position close to such a region (that is, a position satisfying the requirement of the above distance), the opening 9a can be made easy to open, and breathability can be suitably improved.

As shown in FIG. 2, the at least one opening 9a is disposed on an inner side relative to the elastic member 8 in the width direction X. In the present embodiment, since all the cut portions 91 are disposed on the inner side relative to the elastic member 8 in the width direction X, all the openings 9a are formed on the inner side relative to the elastic member 8 in the width direction X. In the worn state, a portion on the inner side in the width direction X relative to the elastic member 8 is likely to be in close contact with the body of the pet. According to the above configuration, by forming the opening 9a in such a region, the effect of improving breathability by the opening 9a can be enhanced.

### [Modifications]

Although the embodiments of the present disclosure have been described above, the present disclosure is not limited to the above embodiments. Materials and shapes of respective configurations are not limited to the materials and shapes described above, and various materials and shapes can be adopted. Further, some configurations included in the configurations of the above-described embodiments may be changed or omitted, or other configurations may be added. Hereinafter, some modifications will be described.

### (First Modification)

The at least one opening 9a may be formed so as to penetrate at least the leakage-preventing sheet 42 in the thickness direction Z. That is, the opening 9a does not have to penetrate the top sheet 3 and the exterior sheet 41. For example, an opening portion having an opening area like the region B in FIG. 2 may be provided only in the leakage-preventing sheet 42. The leakage-preventing sheet 42 disposed adjacent to the absorbent core 11 in the back sheet 4 is usually formed of a material with low breathability (for example, a film) for leakage prevention. According to the above configuration, by forming the opening so as to penetrate at least the leakage-preventing sheet 42, breathability in the worn state can be effectively improved.

### (Second Modification)

The at least one opening 9a may be formed so as to penetrate at least the top sheet 3 and the leakage-preventing sheet 42 in the thickness direction Z. The exterior sheet 41 made of a nonwoven fabric has a certain degree of breathability. Therefore, by forming an opening penetrating at least the top sheet 3 and the leakage-preventing sheet 42 (for example, an opening portion having an opening area like the region B in FIG. 2), it becomes possible to ventilate an inner space (gap S) facing the top sheet 3 and an outer space facing the back sheet 4 (exterior sheet 41) via the opening and the nonwoven fabric (exterior sheet 41). As described above, breathability in the worn state can be effectively improved.

### (Third Modification)

In the first modification and the second modification, the at least one opening 9a may be formed so as to penetrate the exterior sheet 41 in the thickness direction Z. Note that the opening 9a formed so as to penetrate also the exterior sheet 41 in the second modification is similar to the configuration of the present embodiment (that is, the configuration in which the opening 9a is formed by the cut portion 91 penetrating the entire main body portion 2). By forming the opening 9a so as to penetrate also the exterior sheet 41 composed of a nonwoven fabric, breathability in the worn state can be even more effectively improved.

### (Fourth Modification)

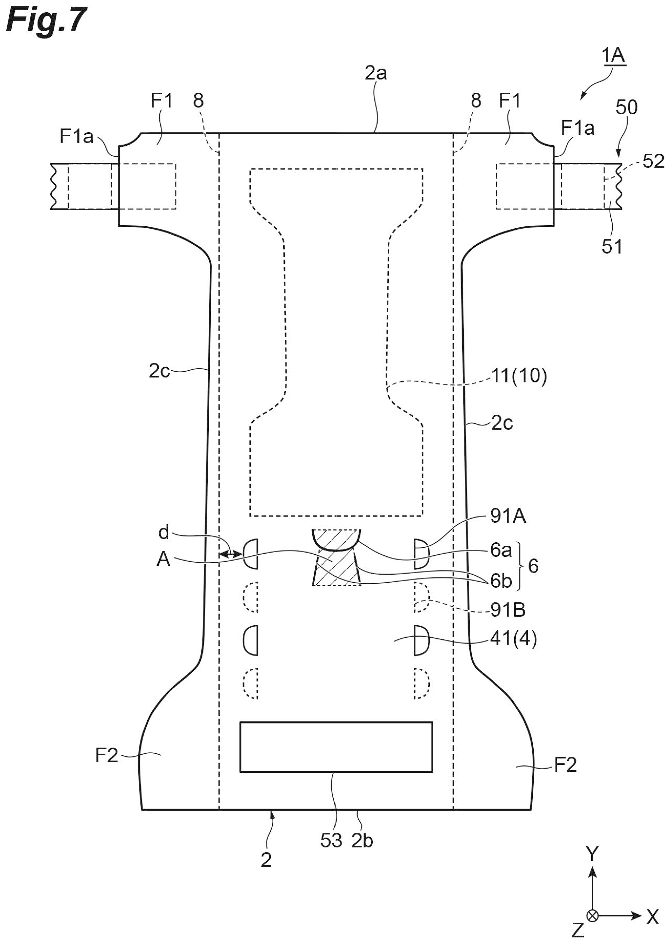

FIG. 7 is a plan view of a pet diaper 1A according to a fourth modification as viewed from a non-skin side. As shown in FIG. 7, like the pet diaper 1A, at least one opening provided in the main body portion 2 may have an opening 91A (third opening) penetrating the top sheet 3 in the thickness direction Z, and an opening 91B penetrating the leakage-preventing sheet 42 in the thickness direction Z. The opening 91A does not penetrate the leakage-preventing sheet 42, and the opening 91B does not penetrate the top sheet 3. The opening 91A and the opening 91B are disposed so as not to overlap in the thickness direction Z. In the example of FIG. 7, among four openings arranged in the longitudinal direction Y on both left and right sides, the first and third openings from the ventral side are formed as the openings 91A, and the second and fourth openings from the ventral side are formed as the openings 91B. According to the configuration in which at least one (four in the example of FIG. 7) opening 91A and at least one (four in the example of FIG. 7) opening 91B are provided and these openings 91A and 91B are disposed so as not to overlap each other like the pet diaper 1A, improvement of breathability in the worn state can be achieved by each of the openings 91A and 91B, and material strength (thickness) can be appropriately maintained in the entire main body portion 2. That is, by configuring so that a thin portion where the opening 91A and the opening 91B overlap (a portion where material strength is particularly weak) is not formed, strength of the entire main body portion 2 can be secured.

### (Fifth Modification)

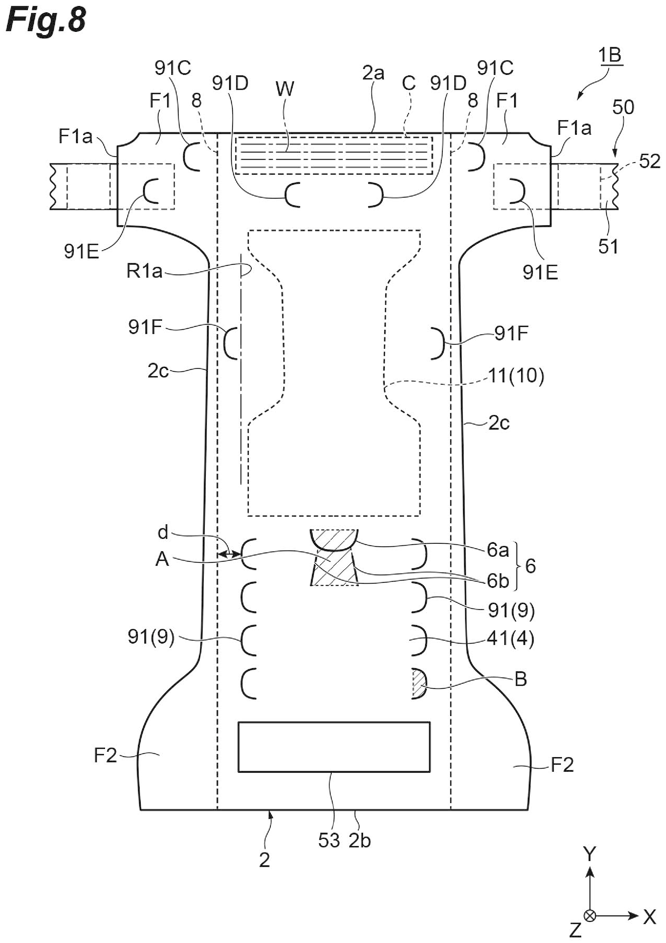

FIG. 8 is a plan view of a pet diaper 1B according to a fifth modification as viewed from a non-skin side. As shown in FIG. 8, the pet diaper 1B is different from the pet diaper 1 in that two each of cut portions 91C, 91D, 91E, and 91F are provided in the main body portion 2. Further, a ventral side end portion of the absorbent core 11 of the pet diaper 1B is located on a dorsal side relative to the ventral side end portion of the absorbent core 11 of the pet diaper 1. In the example of FIG. 8, the ventral side end portion of the absorbent core 11 is disposed at substantially the same position as a dorsal side end portion of the flap portion F1 in the longitudinal direction Y. Further, an elastic region C in which a plurality of elastic members W extending in the width direction X are disposed is provided along the ventral side end portion 2a of the main body portion 2. Each elastic member W is provided so as to contract in the width direction X by being fixed to the main body portion 2 in a state of being stretched in the width direction X. Thereby, a portion corresponding to the elastic region C of the main body portion 2 is provided so as to contract in the width direction X.

In the pet diaper 1B, at least one opening (opening formed by the cut portion 91C) is disposed in at least one of the pair of flap portions F1. In the present embodiment, two cut portions 91C disposed symmetrically are provided in the flap portions F1 on both left and right sides. As shown in FIG. 5, in the worn state, when the pair of fastening tabs 50 are pulled in the width direction X to engage with the target portion 53, the flap portion F1 curves and comes into close contact with the body of the pet P. Therefore, since the opening disposed in such a flap portion F1 (opening formed by the cut portion 91C) is easy to open in the worn state, the effect of improving breathability by the opening can be enhanced.

In the pet diaper 1B, the at least one opening has a first opening (opening formed by the left cut portion 91C in FIG. 8) disposed in one of the pair of flap portions F1 (left flap portion F1 in FIG. 8), and a second opening (opening formed by the right cut portion 91C in FIG. 8) disposed in the other of the pair of flap portions F1 (right flap portion F1 in FIG. 8). Further, the elastic region C (elastic member W) described above is provided in a region between the first opening and the second opening of the main body portion 2. According to the above configuration, in the worn state, a force by which the elastic member W contracts in the width direction X acts, whereby the openings (the first opening and the second opening) disposed in the flap portions F1 become even easier to open, so that the effect of improving breathability by the openings can be further enhanced.

In the pet diaper 1B, at least one opening (opening formed by the cut portion 91D) is disposed between the pair of fastening tabs 50. In the example of FIG. 8, the two cut portions 91D are disposed at positions on the ventral side relative to the absorbent core 11 (between the absorbent core 11 and the elastic region C). In the worn state, when the pair of fastening tabs 50 are pulled in the width direction X to engage with the target portion 53, a region between the pair of fastening tabs 50 (that is, a portion where the opening formed by the cut portion 91D is provided) curves and comes into close contact with the body of the pet. Therefore, since the opening disposed in such a region (opening formed by the cut portion 91D) is easy to open in the worn state, the effect of improving breathability by the opening can be enhanced.

In the pet diaper 1B, at least one opening (opening formed by the cut portion 91E) is disposed at a position where the main body portion 2 and the base material (base material sheet 51) of the fastening tab 50 overlap. In the example of FIG. 8, the cut portion 91E provided so as to overlap with the base material sheet 51 is provided in each fastening tab 50. According to the above configuration, by forming the opening (opening formed by the cut portion 91E) in a thick portion where the main body portion 2 and the base material sheet 51 of the fastening tab 50 overlap, which is a portion where breathability is particularly inhibited and stuffiness is likely to occur, the effect of improving breathability by the opening can be enhanced.

In the pet diaper 1B, at least one opening (opening formed by the cut portion 91F) is disposed on an outer side relative to the upright fulcrum (end portion R1a) of the leg side gather LSG in the width direction X. In other words, when forming an opening in a region where the leg side gather LSG is formed in the longitudinal direction Y, the opening is formed avoiding a region on an inner side relative to the upright fulcrum (end portion R1a) of the leg side gather LSG in the width direction X. According to the above configuration, since the opening (opening formed by the cut portion 91F) is formed on an outer side relative to the fulcrum (end portion R1a) where the leg side gather LSG (upright portion 5a) for damming up excrement from the pet is formed, it is possible to improve breathability by the opening while preventing urine leakage caused by the opening.

Note that in the fifth modification, the pet diaper 1B including all of the above-described cut portions 91, 91C, 91D, 91E, and 91F has been described, but only some of these cut portions may be provided in the pet diaper. Further, in this example, the opening is configured to be formed in the worn state by providing the cut portion (opening forming portion) in the main body portion 2, but as described in the above embodiment, the opening itself may be formed in the main body portion 2 by cutting out a part of the main body portion 2.

### (Sixth Modification)

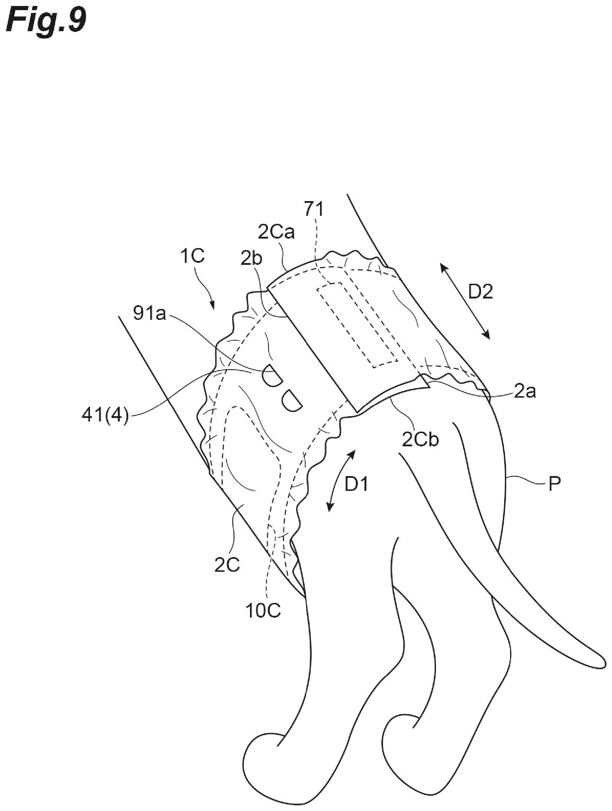

FIG. 9 is a diagram showing an example of a worn state of a pet diaper 1C according to a sixth modification. As shown in FIG. 9, the pet diaper 1C may be a pet diaper (belly band type) that does not include the tail insertion portion 6. The pet diaper 1C has a substantially rectangular main body portion 2C having a longitudinal direction D1 which is a waistline direction (corresponding to the "width direction" in the above embodiment) and a short direction D2 orthogonal to the longitudinal direction D1 (corresponding to the "front-rear direction" in the above embodiment). That is, as shown in FIG. 9, the main body portion 2C is worn by being wrapped around the waistline of the pet P such that the longitudinal direction D1 is along the waistline of the pet P. As an example, a hook tape 71 (fixing member) is provided in the vicinity of one end portion 2a of end portions 2a and 2b of the main body portion 2C in the longitudinal direction D1. As an example, the hook tape 71 is disposed on the non-skin side (surface of the exterior sheet 41) of the main body portion 2C. The hook tape 71 is, for example, a mechanical fastener (hook-and-loop fastener), and is engageable with a skin side surface of the top sheet 3.

As shown in FIG. 9, in the worn state, the main body portion 2C is wrapped around the waistline of the pet P such that the exterior sheet 41 is on the outside and the end portion 2a is located at a central upper part of the back of the pet P. In the pet diaper 1C, a rectangular absorber 10C is disposed in a central portion of the main body portion 2C in the longitudinal direction D1 (that is, a portion facing the urination port of the pet P in the worn state). The absorber 10C includes an absorbent core similar to the absorbent core 11. As an example, an opening 91a is provided on an outer side relative to a region where the absorber 10C is disposed in the longitudinal direction D1. In the example of FIG. 9, a plurality of (two) semicircular openings 91a are arranged side by side in the short direction D2 in each of regions between the respective end portions 2a, 2b of the main body portion 2C and the absorber 10C. Thus, even with the belly band type pet diaper 1C, since it is worn on the pet so as to cover the waistline of the pet, wearing deviation is appropriately suppressed. Further, by providing the opening 91a (or an opening forming portion such as a cut for forming such an opening 91a) at a position not overlapping with the absorber 10C (absorbent core) of the main body portion 2C, breathability in the worn state can be improved.

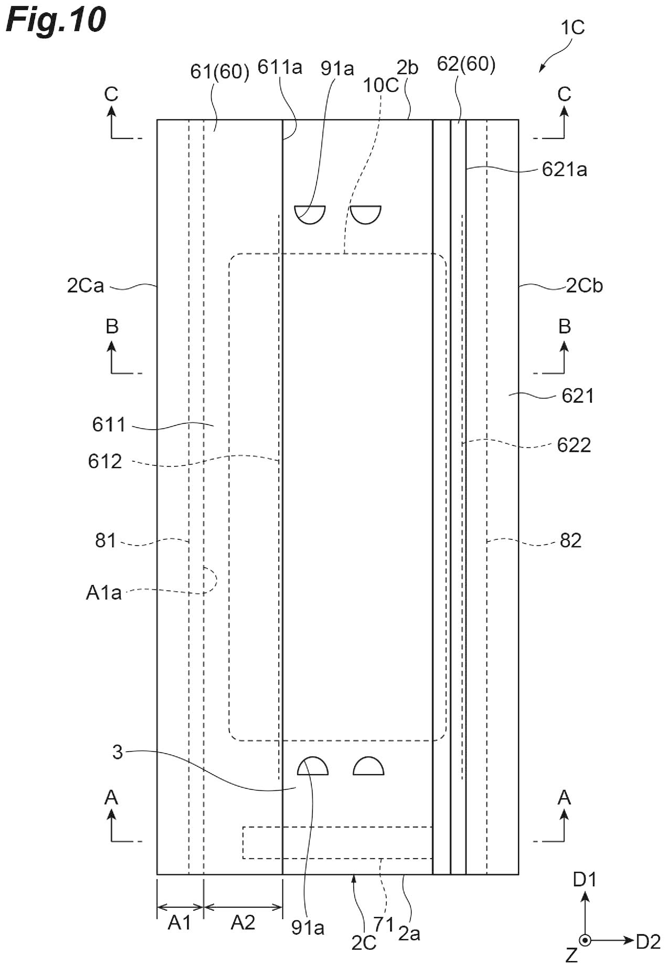

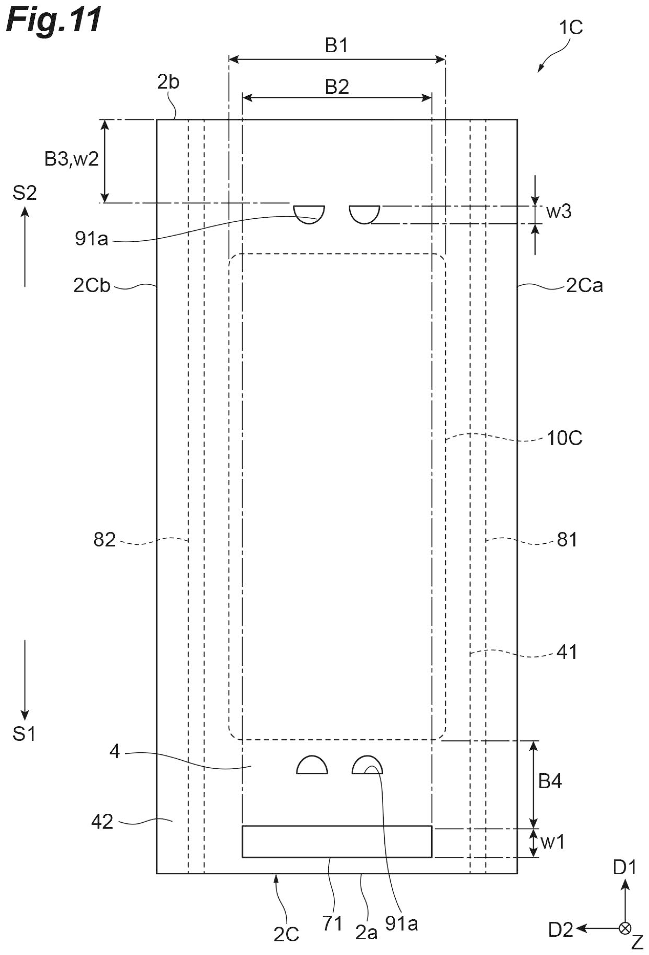

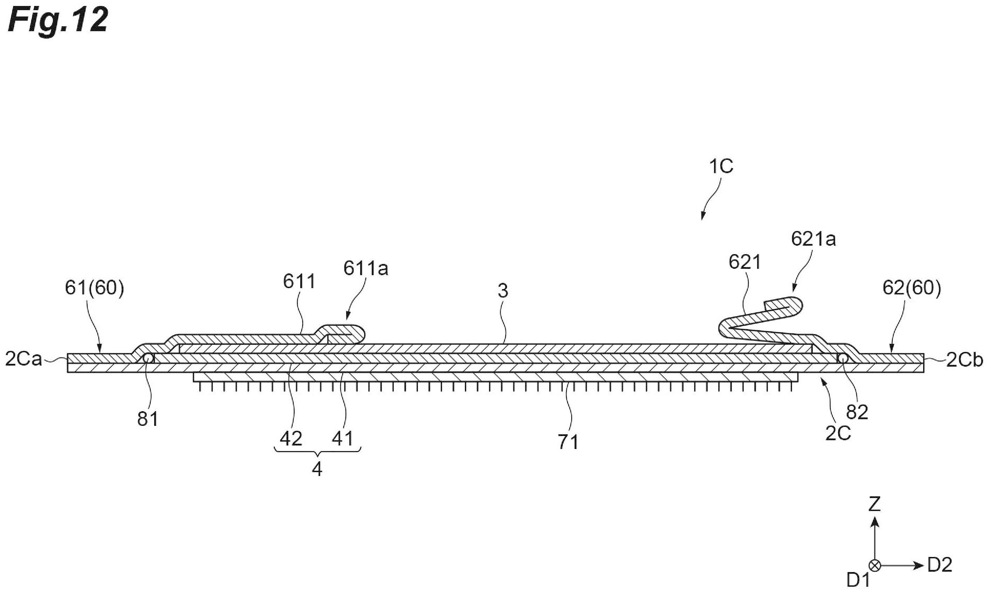

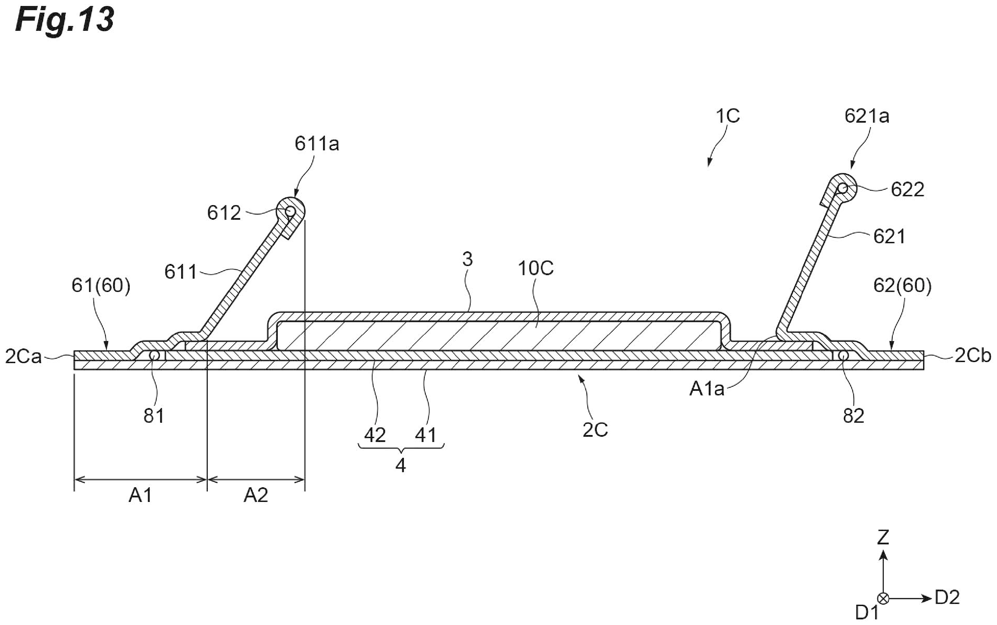

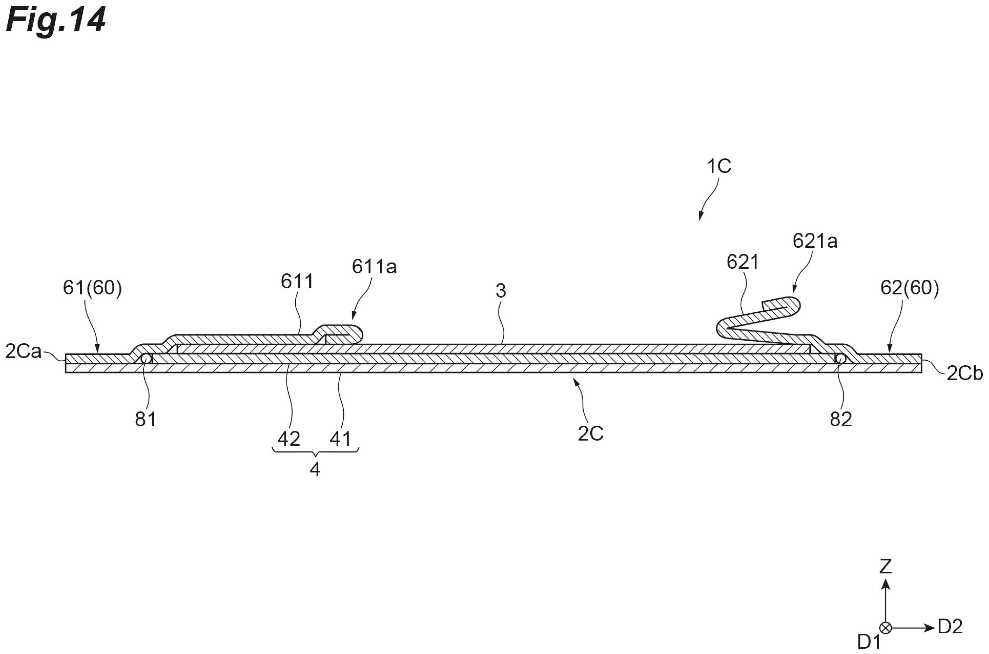

The belly band type pet diaper 1C will be described in more detail with reference to FIGS. 10 to 14. FIG. 10 is a plan view of the pet diaper 1C as viewed from a skin side, and FIG. 11 is a plan view of the pet diaper 1C as viewed from a non-skin side. FIG. 12 is a cross-sectional view of the pet diaper 1C taken along line A-A of FIG. 10. FIG. 13 is a cross-sectional view of the pet diaper 1C taken along line B-B of FIG. 10. FIG. 14 is a cross-sectional view of the pet diaper 1C taken along line C-C of FIG. 10.

As shown in FIGS. 10 and 11, the main body portion 2C has a substantially rectangular (horizontally long) planar shape having a longitudinal direction D1 and a short direction D2. The main body portion 2C has a front end edge 2Ca disposed on one end side in the short direction D2, and a rear end edge 2Cb disposed on the other end side in the short direction D2. As shown in FIG. 9, when the pet diaper 1C is worn on the pet, the front end edge 2Ca is disposed on a front leg side of the pet P, and the rear end edge 2Cb is disposed on a rear leg side of the pet P. In the following description, a direction from the rear end edge 2Cb toward the front end edge 2Ca along the short direction D2 may be referred to as a front side, and a direction from the front end edge 2Ca toward the rear end edge 2Cb along the short direction D2 may be referred to as a rear side.

Like the main body portion 2, the main body portion 2C includes a top sheet 3, a back sheet 4, and an absorber 10C disposed between the top sheet 3 and the back sheet 4. The absorber 10C includes, for example, an absorbent core similar to the absorbent core 11 described above, and a core wrap covering a surface of the absorbent core. The core wrap is composed of, for example, a white and plain tissue or nonwoven fabric.

The main body portion 2C has a pair of leakage-preventing gathers 60 disposed on the outside of the absorber 10 in the short direction D2. The pair of leakage-preventing gathers 60 suppress leakage of urine of the pet excreted into the absorber 10C in the short direction D2. The pair of leakage-preventing gathers 60 are disposed so as to cover both side portions of the top sheet 3 in the short direction D2 from the skin side, and extend in the longitudinal direction D1 over the entire length of the main body portion 2C in the longitudinal direction D1. The pair of leakage-preventing gathers 60 include a front side leakage-preventing gather 61 provided along the front end edge 2Ca, and a rear side leakage-preventing gather 62 provided along the rear end edge 2Cb. In the following description, the front side leakage-preventing gather 61 and the rear side leakage-preventing gather 62 may be collectively referred to as leakage-preventing gathers 60 unless particularly distinguished.

As an example, the front side leakage-preventing gather 61 includes a side sheet 611 partially fixed to the top sheet 3 or the back sheet 4, and an elastic member 612 joined to the side sheet 611. The rear side leakage-preventing gather 62 includes a side sheet 621 partially fixed to the top sheet 3 or the back sheet 4, and an elastic member 622 joined to the side sheet 621. Each of the side sheets 611 and 621 is composed of a nonwoven fabric having water repellency or hydrophobicity. For example, the side sheets 611 and 621 are composed of a spunlace nonwoven fabric, a spunbond nonwoven fabric, a thermal bond nonwoven fabric, a meltblown nonwoven fabric, an SMS nonwoven fabric, a needle punch nonwoven fabric, an air-through nonwoven fabric, or the like. The elastic members 612 and 622 are, for example, rubber threads or the like.

Each of the side sheets 611 and 621 has a vertically long shape long in the longitudinal direction D1, and extends in the longitudinal direction D1 over the entire length of the main body portion 2C in the longitudinal direction D1. As shown in FIGS. 12 to 14, the pair of leakage-preventing gathers 60 extend outward relative to the leakage-preventing sheet 42. More specifically, an outer edge of the front side leakage-preventing gather 61 in the short direction D2 coincides with one outer edge of the exterior sheet 41 in the short direction D2, and constitutes the front end edge 2Ca together with the one outer edge of the exterior sheet 41. An outer edge of the rear side leakage-preventing gather 62 in the short direction D2 coincides with the other outer edge of the exterior sheet 41 in the short direction D2, and constitutes the rear end edge 2Cb together with the other outer edge of the exterior sheet 41.

As shown in FIG. 13, the side sheets 611 and 621 include a fixing portion A1 joined to the top sheet 3 or the back sheet 4, and an upright portion A2 not joined to the top sheet 3. The fixing portion A1 is joined to the top sheet 3 or the back sheet 4 with, for example, a hot melt adhesive. The upright portion A2 is disposed on an inner side of the main body portion 2C relative to the fixing portion A1 in the short direction D2, and is capable of standing up starting from an inner edge A1 a of the fixing portion A1.

As shown in FIGS. 12 and 14, both end portions of the side sheet 611 of the front side leakage-preventing gather 61 in the longitudinal direction D1 are joined to the top sheet 3. More specifically, the side sheet 611 of the front side leakage-preventing gather 61 is joined to the top sheet 3 in a state of falling inward in the short direction D2 in the vicinity of the end portions 2a and 2b. A portion excluding both end portions of an inner edge 611a of the side sheet 611 in the longitudinal direction D1 is not joined to the top sheet 3. Both end portions (fixed ends) of the side sheet 611 in the longitudinal direction D1 serve as upright fulcrums of the side sheet 611 in the longitudinal direction D1. As described above, since both end portions of the side sheet 611 of the front side leakage-preventing gather 61 in the longitudinal direction D1 are joined to the top sheet 3 in a state of falling inward in the short direction D2, the side sheet 611 is in a state of falling inward in the short direction D2 in the stretched state.

On the other hand, an inner edge 621a of the side sheet 621 of the rear side leakage-preventing gather 62 is not joined to the top sheet 3 over the entire length in the longitudinal direction D1. Since the inner edge 621a of the side sheet 621 is not joined to the top sheet 3 over the entire length in the longitudinal direction D1, as shown in FIGS. 10, 12, and 14, the side sheet 621 is in a state of falling outward in the short direction D2 in the stretched state. Since the side sheet 621 falls outward, a distance between the inner edges 611a and 621a of the pair of leakage-preventing gathers 60 in the short direction D2 becomes long, and a region for placing the urethra opening of the pet can be widened. Thereby, it becomes easy to wear the pet diaper 1C at an appropriate position, and urine leakage can be suppressed.

As shown in FIGS. 10 to 14, a pair of elastic members 81 and 82 (waistline elastic members) fixed to the main body portion 2C in a stretched state and extending in the longitudinal direction D1 are provided at both side edge portions of the main body portion 2C in the short direction D2. The elastic members 81 and 82 are, for example, rubber threads or the like. Further, at least one opening 91a is provided in the main body portion 2C. As described above with reference to FIG. 9, in this modification, a total of four semicircular openings 91a, two on each of both sides of the absorber 10C in the longitudinal direction D1, are provided.

As shown in FIG. 11, each opening 91a is provided in a region B1 of a range where the absorber 10C (including the absorbent core) is disposed in the short direction D2. The region B1 is a region ranging from a front end portion to a rear end portion of the absorber 10C. In the belly band type pet diaper 1C, such a region B1 is a region having relatively high rigidity due to an influence of the absorbent core (absorber 10). By providing the opening 91a in such a region B1 having high rigidity, the opening 91a can be made easy to widen in the worn state (see FIG. 9), so that breathability in the worn state can be effectively improved.

Note that in the pet diaper 1C, as an example, all the openings 91a are disposed in the region B1, but in order to obtain the above effect, it is sufficient if at least one opening 91a is disposed in the region B1. Further, for example, when the absorbent core (absorber 10C) has a constricted shape like the absorbent core 11 of the above embodiment, from a viewpoint of suitably obtaining the above effect, it is preferable that the at least one opening 91a is provided in a region of a range from a portion located most rearward of a front end edge of the absorbent core to a portion located most forward of a rear end edge of the absorbent core (that is, a range where a portion having a minimum width in the short direction D2 (narrowest portion) of the absorbent core is disposed).

As shown in FIG. 11, the main body portion 2C has a hook tape 71 that is disposed on a first side S1 (a side where the end portion 2a is located with respect to the absorber 10) which is one of both sides of the absorbent core (absorber 10C) in the longitudinal direction D1, and is fixed to a portion on a second side S2 (a side where the end portion 2b is located with respect to the absorber 10) opposite to the first side S1 of the main body portion 2C in the worn state (see FIG. 9). Further, at least one opening 91a (in this modification, all four openings 91a) is provided in a region B2 of a range where the hook tape 71 is disposed in the short direction D2. The region B2 is a region ranging from a front end portion to a rear end portion of the hook tape 71. In the belly band type pet diaper 1C, such a region B2 is a region having relatively high rigidity due to an influence of the hook tape 71. By providing the opening 91a in such a region B2 having high rigidity, the opening 91a can be made easy to widen in the worn state (see FIG. 9), so that breathability in the worn state can be effectively improved.

Note that in the pet diaper 1C, as an example, all the openings 91a are disposed in the region B2, but in order to obtain the above effect, it is sufficient if at least one opening 91a is disposed in the region B2. Further, in the pet diaper 1C, the region B2 is included in the region B1, but when the hook tape 71 is formed to be horizontally longer than the absorber 10C, the region B1 may be included in the region B2. Further, from a viewpoint of more suitably obtaining the effect described above, it is preferable that the at least one opening 91a is provided in a region of a range where the regions B1 and B2 overlap each other (in the example of FIG. 11, a region coinciding with the region B2 because the region B2 is included in the region B1).

As shown in FIG. 11, the portion on the second side S2 (the side where the end portion 2b is located with respect to the absorber 10) in the main body portion 2C has a non-opening region B3. The non-opening region B3 is a region where the opening 91a is not provided, and which has a width w2 longer than a width w1 of the hook tape 71 in the longitudinal direction D1. According to the above configuration, since it becomes possible to fix the hook tape 71 to the non-opening region B3 (skin side surface of the top sheet 3) so that the hook tape 71 does not protrude from the non-opening region B3, it is possible to suppress overlap between the hook tape 71 and an opening 91a that can be provided outside the non-opening region B3 in the portion on the second side S2 of the main body portion 2C (in this modification, two openings 91a provided between the end portion 2b and the absorber 10C). Thereby, it is possible to prevent fixing strength of the hook tape 71 to the portion on the second side S2 of the main body portion 2C from decreasing due to the overlap between the opening 91a and the hook tape 71, and it is possible to prevent breathability in the worn state realized by the opening 91a from being inhibited by the hook tape 71.

As shown in FIG. 11, at least one opening 91a (in this modification, two openings 91a) is provided in the portion on the second side S2 of the main body portion 2C. Here, a width w3 in the longitudinal direction D1 of the opening 91a provided in the portion on the second side S2 of the main body portion 2C may be made longer than the width w1 of the hook tape 71. That is, respective width dimensions of the opening 91a and the hook tape 71 may be set such that "w3 > w1" holds. According to the above configuration, even when the hook tape 71 is fixed to the portion on the second side S2 of the main body portion 2C such that the hook tape 71 and the opening 91a overlap in the worn state, it is guaranteed that a region where the hook tape 71 and the portion on the second side S2 of the main body portion 2C are fixed is continuously formed in the entire area of the hook tape 71 in the short direction D2. In other words, a portion where the hook tape 71 and the main body portion 2C (portion on the second side S2) are engaged with each other is not divided by the opening 91a in the short direction D2. Thereby, it is possible to prevent fixing strength of the hook tape 71 from decreasing due to the opening 91a provided in the portion on the second side S2 of the main body portion 2C.

Alternatively, the width w3 of the opening 91a provided in the portion on the second side S2 of the main body portion 2C may be made shorter than the width w1 of the hook tape 71. That is, respective width dimensions of the opening 91a and the hook tape 71 may be set such that "w3 < w1" holds. According to the above configuration, since it is possible to prevent the entire opening 91a provided in the portion on the second side S2 of the main body portion 2C from being covered by the hook tape 71 in the worn state, it is possible to suppress breathability in the worn state (that is, breathability realized by the opening 91a formed in the portion on the second side S2 of the main body portion 2C) from being inhibited by the hook tape 71.

As shown in FIG. 11, at least one opening 91a (in this modification, two openings 91a) is provided in a region B4 between the absorber 10C (absorbent core) and the hook tape 71 in the portion on the first side S1 of the main body portion 2C. According to the above configuration, since the at least one opening 91a is formed in a region that is a position facing a side part on the dorsal side of the pet in the worn state and where the number of overlapping sheet materials tends to be large (that is, a portion that is particularly prone to stuffiness because it tends to overlap with the portion on the second side S2 of the main body portion), breathability can be suitably improved.

As shown in FIG. 11, at least one opening 91a (in this modification, all four openings 91a) is provided in a region of a range where the main body portion 2C expands and contracts by the elastic members 81 and 82 in the longitudinal direction D1. According to the above configuration, in the worn state, by appropriately separating (releasing) the opening 91a provided in the main body portion 2C from the body of the pet by expansion and contraction of the elastic members 81 and 82, breathability can be further improved.

Note that in this modification, since the elastic members 81 and 82 extend from one end portion 2a to the other end portion 2b of the main body portion 2C, the region of the above range coincides with the entire region of the main body portion 2C. However, the main body portion may be formed in a shape such that, for example, both side portions in the short direction D2 of each of the end portions 2a and 2b of the main body portion 2C are cut out. In such a case, both end portions of the elastic members 81 and 82 in the longitudinal direction D1 are located on an inner side in the longitudinal direction D1 relative to the end portions 2a and 2b of the central portion of the main body portion 2C in the short direction D2. The above configuration (that is, the configuration in which the at least one opening 91a is provided in the region of the range where the main body portion 2C expands and contracts by the elastic members 81 and 82) is particularly effective when the end portions 2a and 2b and both end portions of the elastic members 81 and 82 in the longitudinal direction D1 do not coincide with each other in this way.

As described above, the pet diaper 1C which is an example of the belly band type has been described, but aspects of the belly band type pet diaper are not limited to the aspect of the pet diaper 1C. For example, in the pet diaper 1C, the opening 91a is provided on each of both sides of the absorber 10C in the short direction D2, but the at least one opening 91a may be provided only on one side (first side S1 or second side S2) of the absorber 10C in the short direction D2. Further, in the pet diaper 1C, the hook tape 71 is provided on the surface (outer surface) of the exterior sheet 41, but the hook tape 71 may be provided on the surface (skin side surface) of the top sheet 3. Further, the at least one opening 91a may be provided at a position overlapping with the hook tape 71 (fixing member). In this case, the opening 91a may be provided so as to penetrate the hook tape 71. Further, in the pet diaper 1C, the hook tape 71 is provided as an example of the fixing member, but the fixing member provided in the pet diaper 1C may be a loop member engaging with a hook-like member. Further, an opening forming portion such as the cut portion 91 of the above embodiment may be provided in the main body portion 2C instead of the opening 91a.

### (Other Modifications or Supplementary Matters)

Respective configurations of the above embodiment and some modifications (first to sixth modifications) may be arbitrarily combined.

Further, in the above embodiment and the first to sixth modifications, an opening similar to the opening 9a or an opening forming portion similar to the cut portion 91 (opening forming portion) is not disposed in a region overlapping with the absorbent core in the main body portion. According to the above configuration, by not disposing any opening for ventilation (or opening forming portion forming the opening) in the region overlapping with the absorbent core in the main body portion, it is possible to reliably prevent absorption performance of the pet diaper from being inhibited by the opening.

Further, in the above embodiment and the first to fifth modifications, the tail insertion portion 6 is provided on the dorsal side relative to the dorsal side end portion of the absorber 10, but the tail insertion portion 6 may be provided on the ventral side relative to the dorsal side end portion of the absorber 10. In this case, the absorber 10 may be formed so as to surround a region where the tail insertion portion 6 is provided when viewed from the thickness direction Z. In other words, an opening region corresponding to the region where the tail insertion portion 6 is provided may be formed in the absorber 10 when viewed from the thickness direction Z.

### Reference Signs List

1, 1A, 1B, 1C...Pet diaper, 2, 2C...Main body portion, 3...Top sheet, 4...Back sheet, 5...Side sheet, 6...Tail insertion portion, 8...Elastic member (Leg elastic member), 9a, 91A, 91B, 91a...Opening, 11...Absorbent core, 41...Exterior sheet (Outer sheet), 42...Leakage-preventing sheet (Inner sheet), 50... Fastening tab, 53... Target portion, 71...Hook tape (Fixing member), 81, 82...Elastic member (Waistline elastic member), 91, 91C, 91D, 91E, 91F...Cut portion (Opening forming portion), F1...Flap portion (Protruding portion), LSG...Leg side gather, R1a...End portion (Upright fulcrum), W...Elastic member.

## Claims

1. A pet diaper to be worn on a pet so as to cover at least a waistline of the pet, comprising:
a main body portion having a width direction along a waistline direction of the pet and a front-rear direction orthogonal to the width direction in a worn state where the pet diaper is worn on the pet, wherein
the main body portion has:
a top sheet disposed at a position facing a skin of the pet in the worn state;
a back sheet disposed on a side opposite to a skin side of the pet in the worn state; and
an absorbent core disposed between the top sheet and the back sheet, and
at least one opening that improves breathability of an internal space facing the top sheet without a tail of the pet being inserted in the worn state or at least one opening forming portion for forming the at least one opening is provided at a position not overlapping with the absorbent core in the main body portion.

2. The pet diaper according to claim 1, wherein
a tail insertion portion for inserting a tail of the pet is provided in the main body portion, and
the at least one opening has a shape or size different from that of the tail insertion portion.

3. The pet diaper according to claim 2, wherein a size of the at least one opening is smaller than a size of an opening portion formed in the tail insertion portion.

4. The pet diaper according to claim 1, wherein the at least one opening has a cutout shape obtained by cutting out a part of the main body portion.

5. The pet diaper according to claim 1, wherein the at least one opening is formed by a cut.

6. The pet diaper according to claim 5, wherein the cut has a curved shape.

7. The pet diaper according to claim 5 or 6, wherein the cut has a shape convex toward an outer side in the width direction.

8. The pet diaper according to claim 5, wherein a plurality of the cuts provided independently of each other are provided in the main body portion.

9. The pet diaper according to claim 1, wherein the at least one opening is disposed on a dorsal side relative to the absorbent core.

10. The pet diaper according to claim 9, wherein
a tail insertion portion for inserting a tail of the pet is provided in the main body portion, and
the at least one opening is disposed on a dorsal side relative to the tail insertion portion.

11. The pet diaper according to claim 9, wherein
the main body portion has a side sheet forming a leg side gather configured to be able to stand up by having both end portions in the front-rear direction fixed and a portion between the both end portions contracting in the front-rear direction, and
the opening is disposed on a dorsal side relative to a dorsal side end portion among the both end portions of the leg side gather.

12. The pet diaper according to claim 9, further comprising:
a pair of fastening tabs extending outward in the width direction from both end portions of the main body portion in the width direction; and
a target portion disposed in a region on a dorsal side relative to the pair of fastening tabs in the main body portion and engaging with the pair of fastening tabs in the worn state, wherein
the at least one opening is disposed only on a ventral side relative to the target portion in the front-rear direction.

13. The pet diaper according to claim 1, further comprising:
a pair of fastening tabs extending outward in the width direction from both end portions of the main body portion in the width direction; and
a target portion disposed in a region on a dorsal side relative to the pair of fastening tabs in the main body portion and engaging with the pair of fastening tabs in the worn state, wherein
the pair of fastening tabs are provided on each of a pair of protruding portions extending outward in the width direction from a region where the absorbent core is disposed in the main body portion, and
the at least one opening is disposed in at least one of the pair of protruding portions.

14. The pet diaper according to claim 13, wherein
the at least one opening has a first opening disposed in one of the pair of protruding portions and a second opening disposed in the other of the pair of protruding portions, and
an elastic member that is fixed to the main body portion in a state of being stretched in the width direction and extends in the width direction is provided in a region between the first opening and the second opening of the main body portion.

15. The pet diaper according to claim 1, further comprising:
a pair of fastening tabs extending outward in the width direction from both end portions of the main body portion in the width direction; and
a target portion disposed in a region on a dorsal side relative to the pair of fastening tabs in the main body portion and engaging with the pair of fastening tabs in the worn state, wherein
the pair of fastening tabs are provided on each of a pair of protruding portions extending outward in the width direction from a region where the absorbent core is disposed in the main body portion, and
the at least one opening is disposed between the pair of fastening tabs.

16. The pet diaper according to claim 1, further comprising:
a pair of fastening tabs extending outward in the width direction from both end portions of the main body portion in the width direction; and
a target portion disposed in a region on a dorsal side relative to the pair of fastening tabs in the main body portion and engaging with the pair of fastening tabs in the worn state, wherein
the at least one opening is disposed at a position where the main body portion and a base material of the fastening tab overlap.

17. The pet diaper according to claim 1, wherein
the main body portion has a side sheet forming a leg side gather configured to be able to stand up by having both end portions in the front-rear direction fixed and a portion between the both end portions contracting in the front-rear direction, and
the opening is disposed on an outer side relative to an upright fulcrum of the leg side gather in the width direction.

18. The pet diaper according to claim 1, wherein
a tail insertion portion for inserting a tail of the pet is provided in the main body portion, and
the opening is disposed on an outer side relative to the tail insertion portion in the width direction.

19. The pet diaper according to claim 18, wherein the at least one opening and the tail insertion portion are provided in a third portion from a ventral side when the main body portion is divided into four in the front-rear direction.

20. The pet diaper according to claim 18, wherein
the main body portion has a side sheet forming a leg side gather configured to be able to stand up by having both end portions in the front-rear direction fixed and a portion between the both end portions contracting in the front-rear direction, and
the at least one opening is disposed at a position overlapping with the side sheet.

21. The pet diaper according to claim 1, wherein
a leg elastic member that is fixed to the main body portion in a state of being stretched in the front-rear direction along an outer edge portion of the main body portion in the width direction and extends in the front-rear direction is provided, and
a distance between the leg elastic member and the at least one opening in the width direction is smaller than a diameter of a minimum circle including the at least one opening.

22. The pet diaper according to claim 1, wherein
a leg elastic member that is fixed to the main body portion in a state of being stretched in the front-rear direction along an outer edge portion of the main body portion in the width direction and extends in the front-rear direction is provided, and
the at least one opening is disposed on an inner side relative to the leg elastic member in the width direction.

23. The pet diaper according to claim 1, wherein
the back sheet has:
an outer sheet made of a nonwoven fabric constituting an outermost surface of the main body portion; and
an inner sheet disposed between the outer sheet and the absorbent core, and
the at least one opening penetrates at least the inner sheet in a thickness direction of the main body portion orthogonal to the width direction and the front-rear direction.

24. The pet diaper according to claim 23, wherein
the back sheet has:
an outer sheet made of a nonwoven fabric constituting an outermost surface of the main body portion; and
an inner sheet disposed between the outer sheet and the absorbent core, and
the at least one opening penetrates at least the top sheet and the inner sheet in the thickness direction.

25. The pet diaper according to claim 23 or 24, wherein the opening penetrates the outer sheet in the thickness direction.

26. The pet diaper according to claim 1, wherein
the back sheet has:
an outer sheet made of a nonwoven fabric constituting an outermost surface of the main body portion; and
an inner sheet disposed between the outer sheet and the absorbent core,
the at least one opening has a third opening penetrating the top sheet in a thickness direction of the main body portion orthogonal to the width direction and the front-rear direction, and a fourth opening penetrating the inner sheet in the thickness direction, and
the third opening and the fourth opening are disposed so as not to overlap in the thickness direction.

27. The pet diaper according to claim 1, wherein the main body portion has a horizontally long shape having a longitudinal direction and a short direction, and is worn by being wrapped around a waistline of the pet such that the longitudinal direction is along the waistline of the pet.

28. The pet diaper according to claim 27, wherein the at least one opening or the at least one opening forming portion is provided in a region of a range where the absorbent core is disposed in the short direction.

29. The pet diaper according to claim 27, wherein
the main body portion has a fixing member that is disposed on a first side which is one of both sides of the absorbent core in the longitudinal direction, and is fixed to a portion on a second side opposite to the first side of the main body portion in the worn state, and
the at least one opening or the at least one opening forming portion is provided in a region of a range where the fixing member is disposed in the short direction.

30. The pet diaper according to claim 29, wherein the portion on the second side in the main body portion has a non-opening region where the at least one opening or the at least one opening forming portion is not provided, and which has a width longer than a width of the fixing member in the longitudinal direction.

31. The pet diaper according to claim 29, wherein
the at least one opening or the at least one opening forming portion is provided in the portion on the second side of the main body portion, and
a width in the longitudinal direction of the at least one opening or the at least one opening forming portion provided in the portion on the second side is longer than the width of the fixing member in the longitudinal direction.

32. The pet diaper according to claim 29, wherein
the at least one opening or the at least one opening forming portion is provided in the portion on the second side of the main body portion, and
a width in the longitudinal direction of the at least one opening or the at least one opening forming portion provided in the portion on the second side is shorter than the width of the fixing member in the longitudinal direction.

33. The pet diaper according to claim 27, wherein
the main body portion has a fixing member that is disposed on a first side which is one of both sides of the absorbent core in the longitudinal direction, and is fixed to a portion on a second side opposite to the first side of the main body portion in the worn state, and
the at least one opening or the at least one opening forming portion is provided in a region between the absorbent core and the fixing member in the portion on the first side of the main body portion.

34. The pet diaper according to claim 27, further comprising:
a waistline elastic member that is fixed to the main body portion in a state of being stretched in the longitudinal direction and extends in the longitudinal direction along both side edge portions of the main body portion in the short direction, wherein
the at least one opening or the at least one opening forming portion is provided in a region of a range where the main body portion expands and contracts by the waistline elastic member in the longitudinal direction.

35. The pet diaper according to claim 1, wherein an opening similar to the at least one opening or an opening forming portion similar to the at least one opening forming portion is not disposed in a region overlapping with the absorbent core in the main body portion.
